# EUROPÄISCHE PATENTSCHRIFT

(11) **EP 1 079 952 B1**
(45) Veröffentlichungstag und Bekanntmachung des Hinweises auf die Patenterteilung: **04.12.2002**
(21) Anmeldenummer: 99925021.0
(22) Anmeldetag: 20.05.1999
(51) Int. Cl.: B23P 19/06, B23P 19/00

(54) **VERFAHREN UND VORRICHTUNG ZUR ÜBERGABE VON BEFESTIGUNGSELEMENTEN AN STANZKÖPFEN**
METHOD AND DEVICE FOR TRANSFERRING FIXING ELEMENTS TO PUNCHING HEADS
PROCEDE ET DISPOSITIF POUR LE TRANSFERT D'ELEMENTS DE FIXATION A DES TETES DE PRESSION

(30) Priorität: 22.05.1998 DE 19823040
(43) Veröffentlichungstag der Anmeldung: 07.03.2001
(73) Patentinhaber: Profil Verbindungstechnik GmbH & Co. KG, 61381 Friedrichsdorf (DE)
(72) Erfinder: VIETH, Michael, D-61118 Bad Vilbel (DE); BABEJ, Jiri, D-35423 Lich (DE)
(74) Vertreter: Manitz, Finsterwald & Partner GbR
(86) Internationale Anmeldenummer: EP9903487
(87) Internationale Veröffentlichungsnummer: WO99061197

(56) Entgegenhaltungen:
- EP-A- 0 864 396
- DE-A- 4 422 708
- US-A- 5 360 137
- US-A- 5 619 788

## Beschreibung

Die vorliegende Erfindung betrifft ein Verfahren zur Übergabe von Befestigungselementen an Stanzköpfe in einer Presse zum Einpressen der Befestigungselemente in plattenförmige Werkstücke, wobei die Befestigungselemente von einem Fördergerät oder Sortier- und Fördergerät über eine Führung an die Presse herangeführt werden, nach dem Oberbegriff vom Anspruch 1 bzw. eine Vorrichtung entsprechend dem Oberbegriff vom Anspruch 7.

Der Begriff Stanzkopf ist hier als Gattungsbegriff für alle Arbeitsköpfe zu verstehen, die dem Einbringen von Befestigungselementen oder anderer Elemente in oder an Blechteile dienen und bedeutet nicht zwangsläufig, daß das Blech durchstanzt wird. Beispielsweise könnte ein erforderliches Durchstanzen des Blechteils früher erfolgt sein, so daß der Stanzkopf als Setzkopf zu verstehen ist. Auch sind Arbeitsköpfe bekannt, wo eine umformtechnische Verbindung zwischen einem Element und einem Blechteil oder zwischen zwei Blechteilen durchgeführt wird, ohne das Blechteil bzw. die Blechteile zu durchstanzen.

Ein Verfahren der oben angegebenen Art ist in der blechverarbeitenden Industrie häufig anzutreffen.

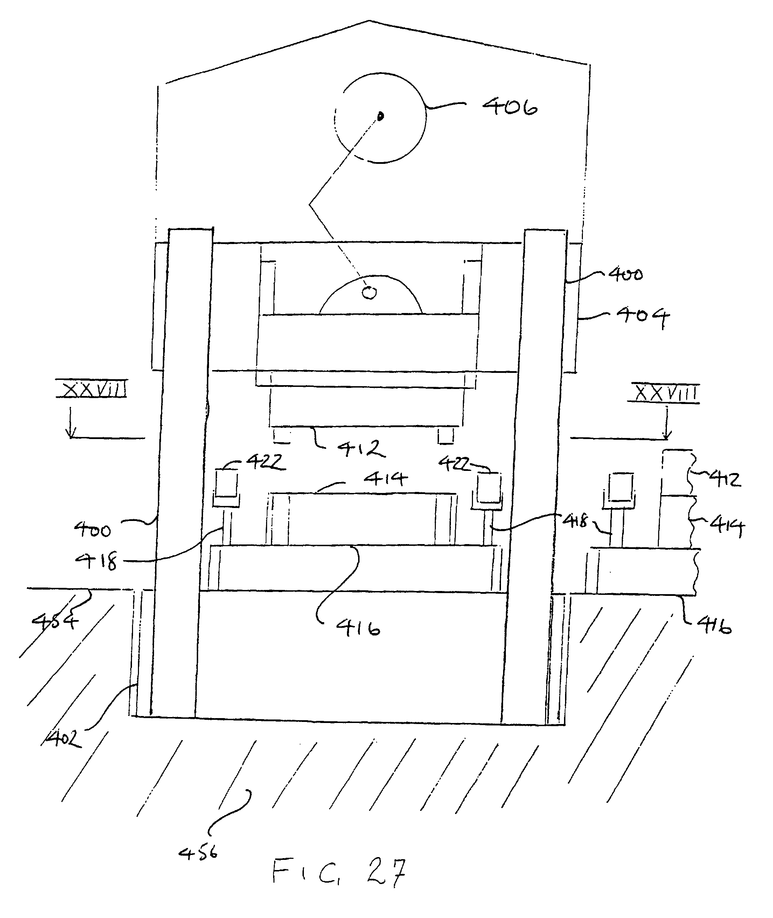

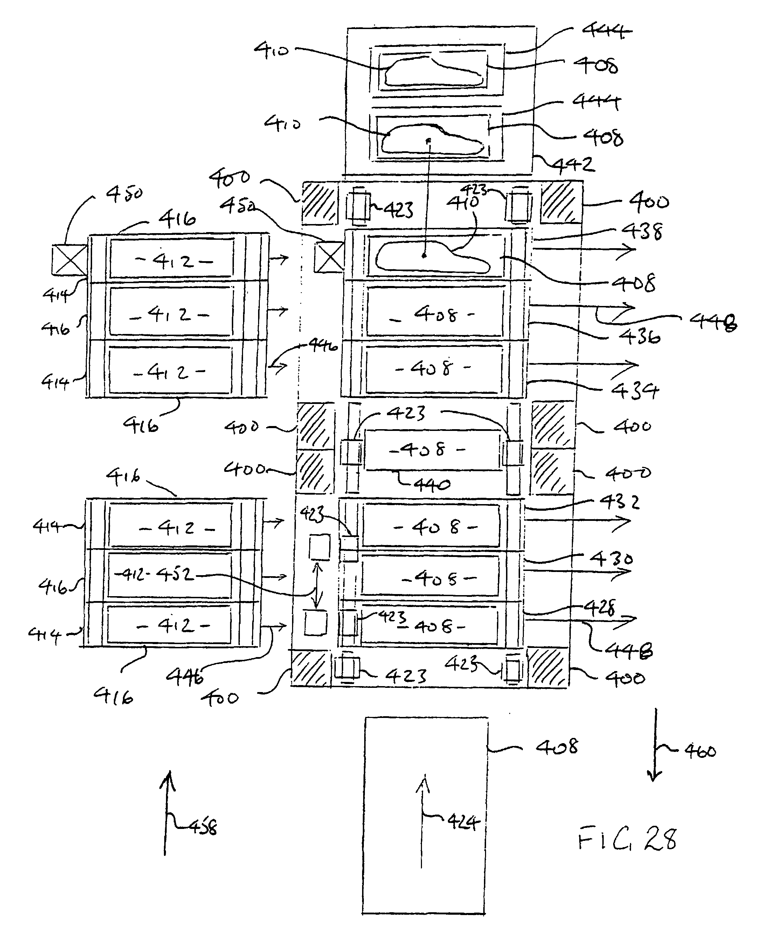

Die direkte Zuführung von Elementen insbesondere in Transferwerkzeugoberteile bereitet große Probleme, da die Förderschläuche oft mit Feeder- bzw. Roboterarmen kollidieren können. Diese Problematik wird näher erläutert in der Figurenbeschreibung unter Bezugnahme auf die Figuren 27,28.

Aufgabe der vorliegenden Erfindung ist es, ein Verfahren der eingangs genannten Art bzw. entsprechende Vorrichtungen oder Einrichtungen vorzusehen, das bzw. die die Zuführung von Befestigungselementen in eine Presse ohne großen technischen Aufwand erleichtert, Kollisionsprobleme weitestgehend vermeidet bzw. vermeiden und zuverlässig arbeitet bzw. arbeiten, so daß Störungsfälle weitestgehend vermieden werden.

Zur Lösung dieser Aufgabe wird verfahrensmäßig, bei einem Verfahren nach dem Oberbegriff vom Anspruch 1 vorgesehen, daß die Befestigungselementübergabe von der Übergabeeinrichtung in die Annahmeeinrichtung in die vertikale Richtung, d.h. in, oder entgegengesetzt zur Schließrichtung der Presse erfolgt.

Eine vorrichtungsmäßige Lösung der Aufgabe ist dem Anspruch 7 zu entnehmen.

Dadurch, daß mehrere, sich in der Presse befindliche Stanz- bzw. Setzköpfe mit Befestigungselementen über eine vom Fördergerät bzw. Sortierund Fördergerät kommende Führung und eine von dieser Führung Befestigungselemente erhaltende Verteilerstation gespeist werden, wobei die Verteilerstation im Bereich der Presse angeordnet ist, wird die Anzahl von Führungen, die insgesamt vom Fördergerät bzw. Sortier- und Fördergerät kommen, auf ein Minimum herabgesetzt (eine Führung für jede vorgesehene Befestigungselementsorte). Diese können erfindungsgemäß so installiert werden, daß sie nicht mit Feeder- bzw. Roboterarmen kollidieren.

Bei bekannten Pressenanordnungen können die Stanz- bzw. Setzköpfe auf dem oberen Werkzeug der Presse, auf dem unteren Werkzeug der Presse oder auf einer Zwischenplatte der Presse angeordnet werden. Eine etwaig vorhandene Zwischenplatte kann auch als ein oberes Werkzeug der Presse betrachtet werden, wenn es mit einem unteren Werkzeug zusammenarbeitet, um Befestigungselemente in ein dazwischenliegendes Blechteil einzubringen. Genauso kann eine Zwischenplatte als ein unteres Werkzeug betrachtet werden, wenn es mit einem oberen Werkzeug der Presse zusammenarbeitet, um Befestigungselemente in ein dazwischenliegendes Blechteil einzubringen. Es ist besonders günstig, die Verteilerstation am oder benachbart zum oberen Werkzeug der Presse oder am bzw. benachbart zum unteren Werkzeug der Presse anzuordnen, je nachdem, wo sich die meisten von ihr zu speisenden Stanzköpfe befinden. Im Regelfall ist es günstig, die Verteilerstation am oberen Werkzeug der Presse anzuordnen und die Führung für die Zulieferung der Befestigungselemente vom Förder- bzw. Sortiergerät zu der Verteilerstation erfolgt dann im unteren Bereich der Presse zu einer Übergabestation am unteren Werkzeug der Presse.

Durch die so vorgegebene Lage der Führung für die Zufuhr der Befestigungselemente vom Förder- bzw. Sortiergerät kann diese beispielsweise aus dem Bewegungsbereich eines Transferbalkens gehalten werden, der für den Transfer der Werkstücke in die Transferpresse bzw. innerhalb der Transferpresse zuständig ist. Auch behindert diese Lage üblicherweise nicht die Bewegung von Feeder- bzw. Roboterarmen. Es wäre allerdings auch denkbar, die entsprechende Führung für die Anlieferung der Befestigungselemente vom Fördergerät bzw. vom Sortier- und Fördergerät so zu führen, daß sie sich stets oberhalb von etwaigen beweglichen Teilen befindet. Diese Auslegung wäre erfindungsgemäß von Vorteil, wenn die Verteilerstation am unteren Werkzeug der Presse oder an der Zwischenplatte angeordnet wäre und die erfindungsgemäß vorgesehene Übergabestation am oberen Werkzeug der Presse angeordnet werden soll. Weiterhin könnte eine solche Führung von Nutzen sein, wenn die Befestigungselemente direkt zu einer Verteilerstation geführt werden sollen, die sich am oberen Werkzeug der Presse befindet, d.h. ohne eine dazwischen angeordnete Übergabestation.

Befindet sich dagegen die Verteilerstation am unteren Werkzeug der Presse, kann die die Befestigungselemente zu der Presse zuführende Führung ebenfalls im Bodenbereich geführt werden und dort direkt an die Verteilerstation angekoppelt werden, d.h. auch hier ohne eine dazwischen angeordnete Übergabestation.

Die bevorzugteste Anordnung ist jedoch eine Anordnung, bei der die Verteilerstation am oder im Bereich des oberen Werkzeugs der Presse angeordnet ist und die Führung für die der Presse zuzuführenden Elemente im unteren Bereich der Presse geführt wird. Bei einer solchen Anordnung ist es dann besonders günstig, wenn - gemäß der Erfindung - die vom Fördergerät bzw. vom Sortier- und Fördergerät kommenden Elemente zu einer Übergabeeinrichtung im unteren Werkzeug der Presse zugeführt werden, die im zusammengefahrenen Zustand der Presse mit einer Annahmeoder Übernahmeeinrichtung am oberen Werkzeug der Presse zusammenwirkt und in diesem zusammengefahrenen Zustand für eine Übergabe von Elementen an die Annahmeeinrichtung und die an diese angeschlossene Verteilerstation sorgt.

Die Verwendung einer Verteilerstation am oberen Werkzeug einer Presse ist an sich bekannt, und zwar bspw. aus der US-A-5,360,137 oder aus der EP-A-0691177. Bei diesen Schriften erfolgt jedoch keine Übergabe zwischen unteren und oberen Werkzeugen der Presse.

An dieser Stelle soll auf die DE-A-4343154 bzw. die Zusatzanmeldung DE-A-4422708 hingewiesen werden. Diese Schriften offenbaren im wesentlichen ein Verfahren bzw. eine Vorrichtung nach dem Oberbegriff von Anspruch 1 bzw. Ansprüche 7. Dort werden Verbindungselemente von der Annahmeeinrichtung nicht in eine Verteilerstation, sondern direkt in einen Stanzkopf geführt.

Bei diesen Schriften erfolgt die Übergabe von der Übergabeeinrichtung in die Annahmeeinrichtung in der horizontalen Richtung im Gegensatz zu den bevorzugten Ausführungsformen der vorliegenden Erfindung, bei denen die Übergabe in der vertikalen Richtung erfolgt.

Die vertikale Übergabe ist aus verschiedenen Gründen gegenüber der Übergabe in horizontale Richtung zu bevorzugen.

Bei der Übergabe in horizontaler Richtung bewegen sich die Befestigungselemente quer zur Schließ- bzw. Öffnungsrichtung der Presse. Die Übergabeeinrichtung und die Annahmeeinrichtung, die zwangsläufig mit der aufeinander zu bzw. voneinander weg bewegenden Teile der Presse gekoppelt sind, trennen sich, jedoch üblicherweise in vertikaler Richtung, d.h. in die Öffnungsrichtung der Presse senkrecht zur Bewegungsrichtung der Elemente. Mit der vorliegenden Erfindung wurde zum ersten Mal erkannt, daß diese zwei unterschiedlichen Bewegungen, d.h. einmal die Bewegung der Mutterelemente in horizontaler Richtung und einmal die Auseinanderbewegung der Übernahmeeinheit und der Übergabeeinrichtung in vertikaler Richtung in Grenzfällen zu Störungen in Betrieb führen können, bei denen ein Befestigungselement an der Übergabestelle weder zuverlässig von der Übergabeeinheit abgegeben, noch zuverlässig von der Annahmeeinheit gehalten wird und daher aus der Führungsbahn herausfallen kann, was zu erheblichen Störungen des Pressenbetriebes und zu schwerwiegenden Beschädigungen der Werkzeuge oder gar der Presse führen kann. Mit diesen beiden unterschiedlichen Richtungen ist es nämlich sehr schwierig, wenn nicht unmöglich, solche Grenzfälle auszuschließen, insbesondere dann, wenn man berücksichtigt, daß alle Befestigungselemente Toleranzen aufweisen, so daß bei Elementen die unter oder über dem Nennmaß sind, diese nicht unbedingt die jeweils erwarteten Stellungen in der Zuführeinrichtung annehmen und sogar durch besonders vorgesehene Halte- oder Schleusenmechanismen hindurchgehen können. Eine ähnliche Schwierigkeit kann dann auftreten wenn aufgrund von Bewegungen oder Dehnungen eines flexiblen Führungsschlauchs die Länge der Elementensaüle im Schlauch nicht genau vorhersehbar ist

Auch wenn solche Grenzfälle relativ selten auftreten, ist eine einzige Störung gleich eine Katastrophe, da die Presse und die dieser zugeordneten Werkzeuge sehr teuer sind, insbesondere dann, wenn es ich um eine Großpresse handelt, die kontinuierlich arbeiten muß, um die entsprechenden Investitionen zu amortisieren. Auch ist der Kunde, d.h. derjenige, der die in der Presse verarbeiteten Blechteile abnimmt im Regelfall daran interessiert, genau vorgegebene Herstellungsmengen rechtzeitig zu erhalten ("just-in-time" Verfahren), so daß unerwartete Störungen des Pressenbetriebes auch in diesem Zusammenhang erhebliche Schwierigkeiten bedeuten und es notwendig machen, vorsorglich Pufferspeicher und Lagerware zu führen, die aber wiederum vom wirtschaftlichen Standpunkt nicht vertretbar sind.

Bei der vertikalen Übergabe der Befestigungselemente nach der vorliegenden Erfindung hat man erkannt, daß diese Gefahr wesentlich geringer ist, da sich die Annahmeeinrichtung und die Übergabeeinrichtung in der gleichen Richtung trennen wie die Elemente sich bewegen. Einerseits kann diese Anordnung so realisiert werden, daß mehr Zeit zur Verfügung steht für die Übergabe der Elemente, was insbesondere dann von Vorteil ist, wenn mehrere Elemente gleichzeitig übergeben werden sollen. Durch die Gleichheit der beiden Richtungen wird auch verhindert, daß die Befestigungselemente Kräfte erfahren, die zu einem Verkanten der Elemente führen können, so daß auch die Möglichkeit, ein Element aufgrund von Verkantungen zu verlieren, nicht mehr gegeben ist.

Darüber hinaus besteht die Möglichkeit die Befestigungselemente bei der Übergabeeinrichtung von zwei Seiten zu halten bzw. zu sperren und bei der Annahmeeinheit die Elemente von zwei ebenfalls entgegengesetzten Seiten zu greifen bzw. zu halten, wobei diese zwei gegenüberliegenden Seiten beispielsweise um 90° versetzt zu den Seiten angeordnet werden können, wo die Elemente von der Übergabeeinheit ergriffen, gehalten oder zurückgehalten werden. Bei einer Übergabe in horizontaler Richtung ist dies nicht zu realisieren, da bei unsicherer Position eines Befestigungselementes aus dem einen oder anderen Grund der so entstehende "Kampf' zwischen den jeweiligen greifenden oder zurückhaltenden Einrichtungen unsicher ausgeht und damit den Verlust des Elementes aus dem Führungskanal zu befürchten ist. Die Gefahr eines solchen Verlustes ist wesentlich geringer, wenn erfindungsgemäß die Befestigungselemente in die gleiche Richtung übergeben werden wie sich die Annahmeeinheit und Übergabeeinheit beim Öffnen der Presse auseinander bewegen. Dieser Gedanke könnte sogar soweit gehen, daß ein Teleskoprohr zwischen der Übergabeeinheit und der Annahmeeinheit vorgesehen ist, wodurch jeglicher Verlust der Elemente bei der Übergabe vermeidbar wäre. Eine solche Teleskopanordnung wäre jedoch bei horizontaler Übergabe nicht möglich, da das Teleskoprohr durch die Öffnungsbewegung der Presse zerstört wäre.

Besonders bevorzugte Ausführungsvarianten des erfindungsgemäßen Verfahrens bzw. der erfindungsgemäßen Vorrichtung lassen sich den Unteransprüchen entnehmen.

Die Erfindung wird nachfolgend näher erläutert anhand von Ausführungsbeispielen unter Bezugnahme auf die Zeichnungen, die zeigen:
- Fig. 1: eine teilweise schematische Darstellung einer Presse mit einem Werkzeugwechselwagen,
- Fig. 2: eine teilweise schematische Darstellung der Draufsicht einer Verteilerstation, die in der Presse der Fig. 1 benutzt wird,
- Fig. 3: ein Steuerpult, das zur elektrischen Steuerung des in Fig. 1 dargestellten Zuführsystems für Verbindungselemente vom Sortier- und Fördergerät bis zu den Stanzköpfen sowie zur Synchronisation der Funktionen zur Arbeitsbewegung der Presse benutzt wird,
- Fig. 4: die Presse der Fig. 1 im zusammengefahrenen Zustand,
- Fig. 5: eine schematische Darstellung eines Teils der Presse der Fig. 1 in einer Ausführungsform mit horizontaler Übergabe der Befestigungselemente im auseinandergefahrenen Zustand der Presse,
- Fig. 6: die Anordnung der Fig. 5 im zusammengefahrenen Zustand der Presse,
- Fig. 7: eine Zeichnung eines Teils einer Presse entsprechend der Fig. 1, mit vertikaler Übergabe der Befestigungselemente im auseinandergefahrenen Zustand der Presse,
- Fig. 8: einen Querschnitt durch die Anordnung der Fig. 7 entsprechend der Schnittebene VIII-VIII der Fig. 7,
- Fig. 9: eine Draufsicht in Richtung des Pfeils IX der Fig. 7,
- Fig. 10: eine Draufsicht in Richtung des Pfeils X der Fig. 8,
- Fig. 11: eine Darstellung entsprechend der Fig. 7, jedoch im teilweise zusammengefahrenen Zustand der Presse,
- Fig. 12: einen Querschnitt entsprechend der Schnittebene XII-XII der Fig. 11.
- Fig. 13: einen Querschnitt entsprechend der Schnittebene XIII-XIII der Fig. 11,
- Fig. 14: eine Draufsicht auf eine Verteilerstation mit vier Ausgangskanälen als konkrete Ausführung der Verteilerstation nach Fig. 1 oder 2,
- Fig. 15: eine Darstellung ähnlich der Fig. 14, jedoch mit schematisch eingezeichneten Befestigungselementen, um die Funktionsweise der Vorrichtung besser darzustellen,
- Fig. 16: einen Querschnitt an der Schnittebene XVI-XVI der Fig. 14,
- Fig. 17: einen Querschnitt an der Schnittebene XVII-XVII der Fig. 14,
- Fig. 18: eine Seitenansicht einer alternativen erfindungsgemäßen Ausführungsform einer Verteilerstation mit zunächst vertikal gerichteten Ausgangskanälen,
- Fig. 19: einen Querschnitt entsprechend der Schnittebene XIX-XIX der Fig. 18,
- Fig. 20: eine perspektivische und schematische Darstellung einer alternativen, erfindungsgemäßen Verteilerstation mit Drehtrommel,
- Fig. 21: eine Querschnittszeichnung entsprechend der Schnittebene XXI-XXI der Fig. 20,
- Fig. 22: eine schematische Darstellung eines erfindungsgemäßen Übergabesystems mit einem von einem Werkzeugwechselwagen getrennten Sortier- und Fördergerät,
- Fig. 23: Draufsicht auf eine zweibahnige Übergabe- und Annahmeeinrichtung,
- Fig. 24: eine schematische Schnittzeichnung entsprechend der Schnittebene XXIV-XXIV in Figur 23,
- Fig. 25: eine schematische Draufsicht auf einen zweibahnigen Stanzkopf, welcher Befestigungselemente von der Annahmeeinrichtung der Figuren 23 und 24 erhält,
- Fig. 26: eine schematische Schnittzeichnung durch den zweibahnigen Stanzkopf der Figur 25 entsprechend der Schnittebene XXVI-XXVI der Figur 25,
- Fig. 27: eine schematische Sternansicht einer an sich bekannten Großpresse und
- Fig. 28: eine schematische Schnittzeichnung durch die Großpresse der Figur 27 entsprechend der Schnittebene XXVIII-XXVIII.

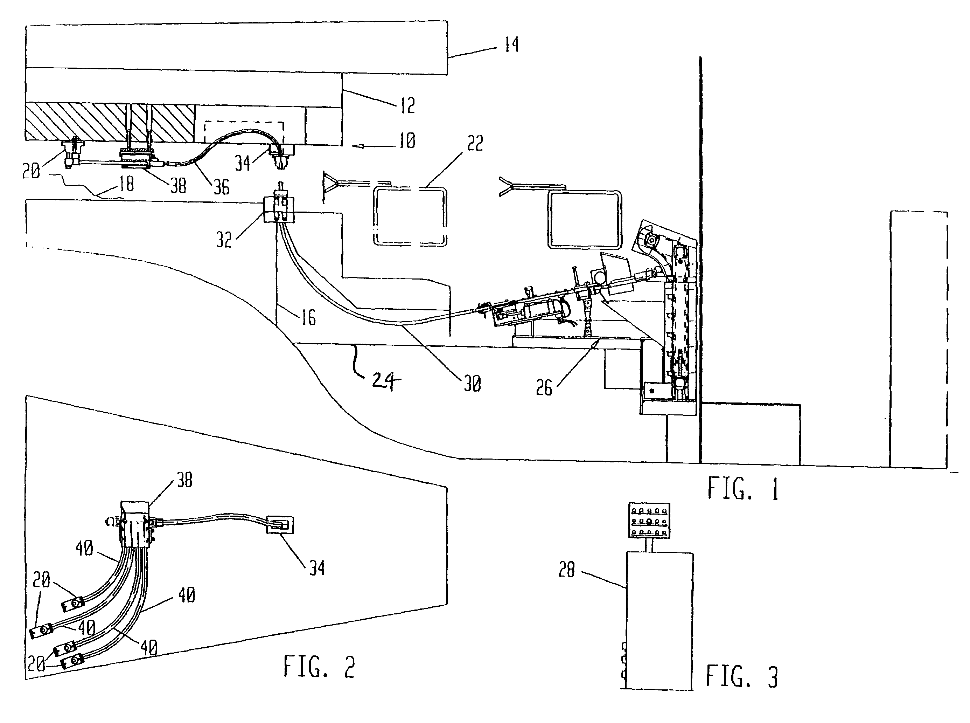

Fig. 1 zeigt mit 10 ein oberes Werkzeug 12, das am Stößel 14 der Presse befestigt ist, und mit 16 ein unteres Werkzeug, das auf dem Werkzeugwechselwagen 24 der Presse angebracht ist. Auf dem unteren Werkzeug 16 befindet sich ein Blechformteil 18, in das mittels der Presse 10 unter Anwendung mehrerer Stanz- bzw. Setzköpfe 20 Befestigungselemente eingesetzt werden können. Von den Stanz- und Setzköpfen 20 ist nur der eine in Fig. 1 gezeigt, wobei aber in diesem Ausführungsbeispiel vier vorhanden sind, wie aus Fig. 2 hervorgeht. Das heißt, daß jedes mal wenn die Presse zusammengefahren wird, d.h. das obere Werkzeug 12 an das untere Werkzeug 16 herangefahren wird, vier gleichartige Befestigungselemente in das Blechformteil 18 eingestanzt bzw. eingepreßt werden. Nicht gezeigt in dieser Darstellung sind Matrizen, die im unteren Werkzeug 16 unterhalb des Blechformteils angeordnet sind, die mit den Setzköpfen 20 in an sich bekannter Weise zusammenarbeiten, um das Einsetzen bzw. Einstanzen der Befestigungselemente beim Zusammenfahren der Presse zu ermöglichen.

Die Presse kann beispielsweise eine sogenannte Transferpresse sein. Wenn die Presse im Rahmen des automatischen Arbeitstaktes wieder geöffnet wird, sorgt ein Transferbalken 22 dafür, daß das Blechformteil 18 zur nächsten Arbeitsstation in der Transferpresse weiterbewegt bzw. aus der Presse ausgestoßen. Anstelle eines Transferbalkens kann das Einsetzen, Umsetzen und/oder die Herausnahme des Blechformteils mittels eines Roboters oder eines Feeders erfolgen. Der Transferbalken 22 ist in zwei Stellungen gezeigt, einmal mit durchgehenden Linien und einmal mit gebrochenen Linien, um die bewegliche Anordnung des Transferbalkens anzudeuten. Der Werkzeugwechselwagen 24 trägt in diesem Ausführungsbeispiel eine Sortier- und Fördereinrichtung, die allgemein mit dem Bezugszeichen 26 gekennzeichnet ist.

Zu diesem oben Fördersystem für Verbindungselemente gehört auch ein Steuerpult, das in Fig. 3 mit 28 schematisch dargestellt ist. Förder- und Sortiergeräte 26 sind an sich bekannt und sorgen dafür, daß Befestigungselemente aus einem Vorrat lagegerecht in eine Führung 30 eingespeist werden. Es kommt hier nicht auf die konkrete Ausbildung des Sortierund Fördergerätes an. Diese kann nach Belieben ausgewählt werden. Bevorzugt ist das modulare Sortier- und Fördergerät der Firma Profil Verbindungstechnik GmbH & Co. KG, das in der deutschen Patentanmeldung 197 09 714.6 beschrieben ist, deren Inhalt hiermit zum Offenbarungsgehalt der vorliegenden Anmeldung gemacht wird. Anstatt eines Sortier- und Fördergerätes kann auch ein Fördergerät alleine zum Einsatz gelangen, wenn die Elemente lagerichtig an das Fördergerät geliefert werden, beispielsweise in Form einer Kette von vororientierten Befestigungselementen.

Man sieht aus Fig. 1, daß die Führung 30 - in diesem Fall als Führungsschlauch realisiert - im unteren Bereich der Presse unterhalb der beweglichen Einrichtung 22 zu einer Übergabeeinrichtung 32 führt, die am unteren Werkzeug 16 der Presse befestigt ist. Direkt oberhalb der Übergabeeinrichtung 32 und mit dieser ausgerichtet befindet sich ein Annahmeeinrichtung 34, die über einen Förderschlauch 36 mit einer Verteilerstation 38 kommuniziert. Sowohl die Annahmeeinrichtung 34 wie auch die Verteilerstation 38 ist am oberen Werkzeug 12 der Presse 10 befestigt.

Von der Verteilerstation gehen vier Führungsschläuche 40 zu den jeweiligen Stanz- bzw. Setzköpfen 20.

Um die Rüstzeiten zu minimieren, wird der Werkzeugwechselwagen 24 bevor er unter die Presse 14 kommt komplett mit Werkzeug sowie Sortierund Fördergerät 26 bestückt. Die Elemente werden vom Sortier- und Fördergerät über die Führung 30, hier in Form eines Führungsschlauches gezeigt, jedoch auch als Führungskanal oder Führungsschiene realisierbar, zur Elementenübergabeeinrichtung 32 am Werkzeugunterteil 16 gefördert und dort beim Zusammenfahren der Presse an die Annahmestation 34 übergeben und zur Verteilerstation über die Führung 36 weitergeleitet. Die Verteilerstation 38 versorgt dann die einzelnen Stanz- bzw. Setzköpfe 20 über die Führungen 40 mit Befestigungselementen.

Die Erfindung umfaßt auch Anordnungen, wo keine Verteilerstation vorgesehen ist, sondern die Übergabe- und Annahme- bzw. Übernahmeeinrichtungen die Befestigungselemente an einen einzelnen Arbeitskopf 20 bzw. Setz- oder Stanzkopf liefern.

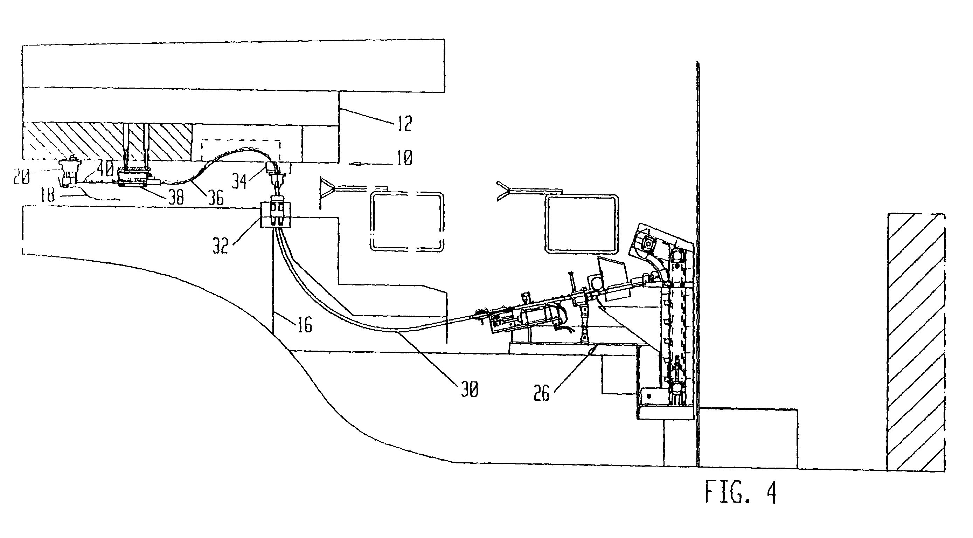

Der geschlossene Zustand der Presse, in dem die Übergabeeinrichtung 32 und die Annahmeeinrichtung 34 der Presse aneinander oder ineinander gefahren sind und die Stanz- bzw. Setzköpfe 20 mit dem Blechformteil in Berührung gelangt sind, ist in Fig. 4 gezeigt. Es hat sich nämlich erfindungsgemäß herausgestellt, daß es wesentlich unproblematischer ist, die Befestigungselemente dem Werzeugunterteil 16 zuzuführen und während der Hubbewegung der Presse 10 an das Werkzeugoberteil zu übergeben.

Wie bereits beschrieben sind die einzelnen Komponenten des Übergabesystems für. die Befestigungselemente durch Förderschläuche oder andere Führungen miteinander verbunden.

Bei Inbetriebnahme der Presse 10 wird diese erst zusammengefahren und bleibt im unteren Totpunkt stehen. Sowohl im Werkzeugunterteil 16 wie auch im Werkzeugoberteil 12 werden alle Führungskanäle 30, 36, 40 sowie die Kanäle innerhalb der Übergabeeinrichtung 32, innerhalb der Annahmeeinrichtung 34 und der Verteilerstation 38 sowie der Stanz- und Setzköpfe 20 mit Befestigungselementen gefüllt. Ist dies geschehen, wird der Förderdruck vom Sortier- und Fördergerät 26 weggenommen, was über ein Steuersignal vom Steuerpult 28 erfolgen kann, das über entsprechende Leitungen mit der Steuerung der Presse 10 kommuniziert und somit stets den Arbeitszustand der Presse kennt. Danach kann die Presse im Automatikmodus betrieben werden. Jedes mal, wenn sich die Presse im Bereich vom unteren Totpunkt befindet, wird die Förderung eingeschaltet und Elemente an das Oberteil bei Bedarf übergeben.

Möglich ist auch, daß die Zuführkanäle nicht vollständig mit Elementen befüllt sind, sondern daß bei jedem Verbinden der beiden Hälften der Übergabeeinheit im Bereich des unteren Totpunkts der Presse ein Verbindungselement durch den Zuführkanal zur Verteilerstation bzw. direkt zum Stanzkopf geschossen wird oder daß durch kurz aufeinander folgende Einzelschüsse mehrer Elemente übergeben werden.

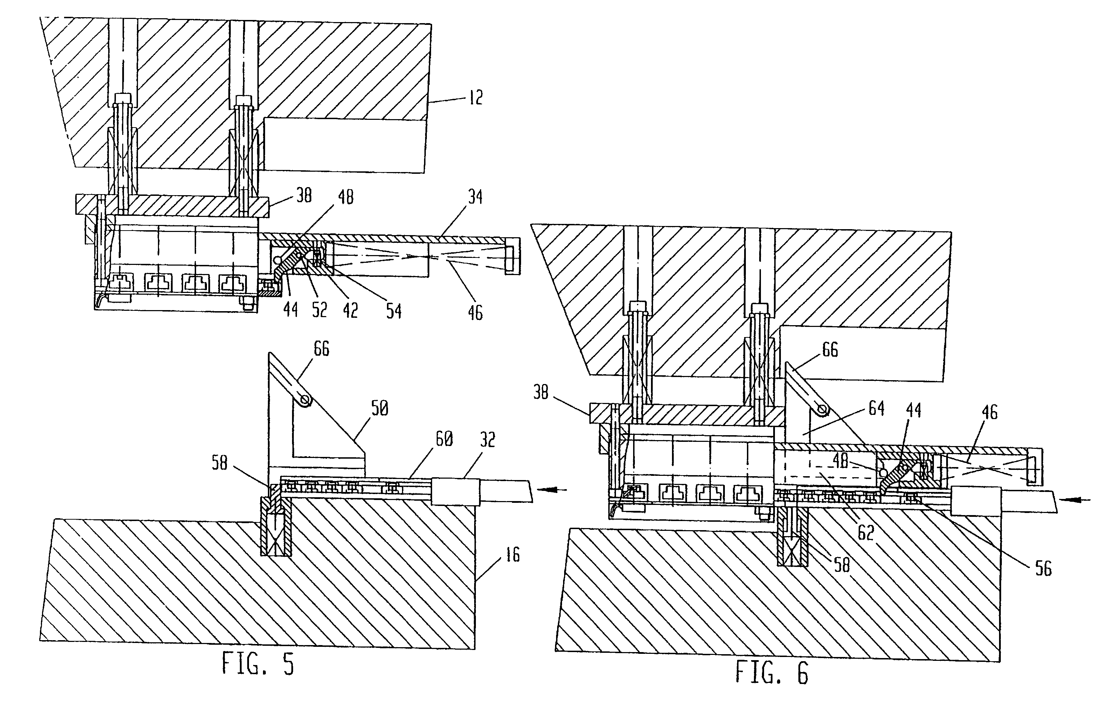

Die Art dieser Übergabe wird nunmehr anhand einer ersten erfindungsgemäßen Ausführungsvariante unter Bezugnahme auf die Fig. 5 und 6 näher beschrieben.

Es handelt sich bei der Ausführungsvariante der Fig. 5 und 6 um eine horizontale Übergabe der Befestigungselemente. Die Annahmeeinrichtung 34 ist am Werkzeugoberteil 12 befestigt und hier als Ausführungsvariante direkt an die Verteilerstation 38 angeschlossen. Denkbar ist auch, daß die Übergabestation mit der Verteilerstation über einen Zuführkanal verbunden ist.

In der Annahmeeinheit 34 befindet sich eine Vorschubeinheit 42 mit Vorschubfinger bzw. -glied 44. Das Vorschubglied 44 wird mittels einer Kraftquelle 46, die hier beispielsweise als Druckfeder realisiert ist, jedoch auch durch eine pneumatische oder gar hydraulische Vorspanneinrichtung ersetzt werden könnte, nach vorne in Richtung der Verteilerstation 38 vorgespannt. An der Vorschubeinheit 42 befindet sich ein Mitnehmer 48 z.B. in Form eines seitlich aus der Vorschubeinheit herausragenden Stiftes. Während der Abwärtsbewegung der Presse, d.h. beim Zusammenfahren der Presse, gelangt dieser Mitnehmerstift 48 in Berührung mit einer Steuerkante 50 am unteren Werkzeug 16 der Presse. Der Mitnehmer wird aufgrund der Schrägstellung der Steuerkante 50 horizontal von der Verteilerstation 38 wegbewegt und spannt auf diese Weise die Vorschubeinrichtung, so daß die Druckfeder 46 eine komprimierte Stellung gemäß Fig. 6 annimmt. Man sieht, daß jetzt ein deutlicher Abstand vorgesehen ist zwischen dem Vorschubglied 44 und der Verteilerstation 38.

Es ist gezeigt, daß das Vorschubglied 44 als Finger ausgebildet ist, der um die Schwenkachse 52 schwenkbar angelegt ist und in die in Fig. 5 und 6 dargestellte Lage durch eine Vorspannfeder 54 gehalten wird. Diese Anordnung des Vorschubgliedes ermöglicht es, daß sich beim Zusammenfahren der Presse das freie Ende des Fingers in die Reihe von Befestigungselementen 56 nachgiebig hineindrückt. Die Reihe von Befestigungselementen 56 wird, wie aus der Darstellung der Fig. 5 ersichtlich ist, durch eine federbelastete Sperre 58 bei geöffneter Presse daran gehindert, aus dem Zufuhrkanal 60 der Übergabeeinrichtung 32 hinauszutreten. Im zusammengefahrenen Zustand der Presse gemäß Fig. 6 wird diese Sperre aufgehoben, was auch durch das Zusammenfahren der Presse bewerkstelligt werden kann, und der Mitnehmer 48 wird horizontal mit einer horizontalen Führung 62 ausgerichtet, so daß sich die vorgespannte Feder 46 nunmehr das Vorschubglied 44 mit einer Anzahl an Befestigungselementen (vier in Fig. 5 und 6) nach links bewegt und die entsprechende Anzahl an Befestigungselementen in die Verteilerstation 38 im geschlossenen Zustand der Presse hinein befördert. Danach öffnet sich die Presse wieder. Der Mitnehmer 48, der jetzt in bezug auf die Verteilerstation 38 die Stelle nach Fig. 5 erreicht hat, befindet sich nunmehr ausgerichtet mit einem vertikalen Führungskanal 64. Danach öffnet die Presse wieder. Beim Passieren des oberen Endes der Steuerkante 50 hebt der Mitnehmer 48 einen schwenkbaren Hebel 66 hoch, der dann in den Zustand der Fig. 5 wieder zurückfällt, so daß die Ausgangsposition gemäß Fig. 5 wieder geschaffen ist und der nächste Arbeitszyklus der Presse mit einem neuen Werkstück 18 durchgeführt werden kann. Mit anderen Worten verhindert der Hebel 66 beim Zusammenfahren der Presse, daß der Mitnehmer 48 sich in unerwünschter Weise nach unten entlang der Führung 64 bewegt, anstatt sich entlang der schrägen Steuerkante 50 zu bewegen. Mit anderen Worten befindet sich bei den Ausführungsformen der Fig. 5 und 6 im Werkzeugoberteil eine Vorschubeinheit 42, die während der Abwärtsbewegung der Presse durch eine Steuerkante 50 gespannt wird. Im Bereich des unteren Totpunkts der Presse wird die Vorschubeinheit 42 entspannt und schiebt eine Reihe von Befestigungselementen 56, die sich in einem Vorratskanal 60 der Übergabeeinrichtung 32 im Werkzeugunterteil befinden, in die Verteilerstation 38. Der Vorratskanal 60 enthält jeweils mindestens so viele Elemente, wie in der Verteilerstation 38 pro Hub der Presse verbraucht werden. Der Vorratskanal 60 wird durch die federbelastete Sperre 58 verschlossen, die sich im unteren Totpunkt der Presse automatisch öffnet.

Die im Oberwerkzeug angeordnete Hälfte der Übergabeeinheit ist gegenüber dem Oberwerkzeug abgefedert, damit die obere und die untere Hälfte der Übergabevorrichtung während der für den ein- und Ausfederweg beinötigten Bewegungszeit in Kontakt sind. Die Übergabezeit ist also proportional zum Ein- und Ausfederweg.

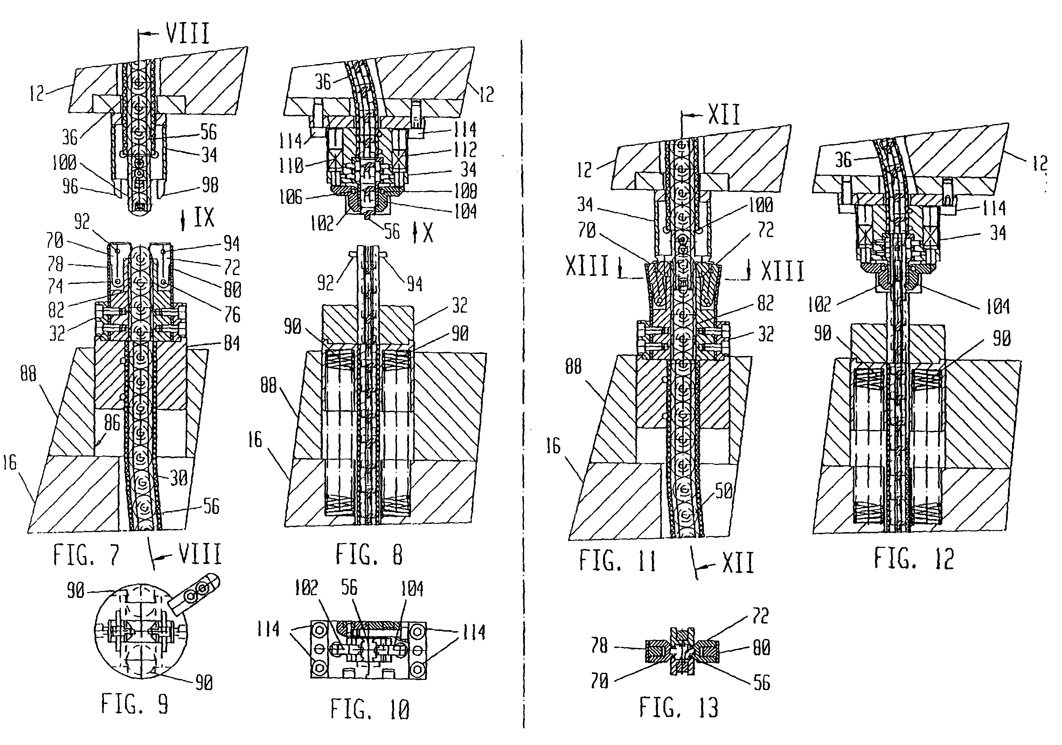

Eine vertikale Übergabe der Befestigungselemente ist ebenfalls erfindungsgemäß möglich. Eine entsprechende Ausführungsvariante, die beste den Erfindern bekannte Ausführungsvariante, wird nachfolgend anhand der Fig. 7 bis 13 näher erläutert.

Fig. 7 zeigt einen schematischen Querschnitt durch die Übergabeeinrichtung 32 und durch die Annahmeeinrichtung 34 in einer Ebene entsprechend der Ebene der Zeichnung der Fig. 1.

Fig. 8 zeigt einen Querschnitt entsprechend der Ebene VIII-VIII in Fig. 7.

Fig. 7 und 8 zeigen die Übergabeeinrichtung 32 und die Annahmeeinrichtung 34 im auseinandergefahrenen Zustand der Presse.

Die Reihe von über den Schlauch 30 vom Sortier- und Fördergerät 26 kommenden Befestigungselemente 56 erstreckt sich durch die Übergabeeinrichtung 32 bis zum oberen Ende derselben. Hier sind zwei federbelastete Sperrhebel 70, 72 vorgesehen, die an jeweiligen Schwenkachsen 74 bzw. 76 schwenkbar gelagert sind und mittels jeweiliger Blattfedern 78, 80 in Richtung aufeinander zu gepreßt sind. Die hakenförmigen Enden der federbelasteten Sperrhebel 70, 72 verhindern, daß die Befestigungselemente 56 aus dem am oberen Ende des offenen Führungskanals 82 der Übergabeeinrichtung 32 herauskommen. Der Führungskanal 82 stellt sozusagen die Fortsetzung des Schlauches 30 dar, der in einem federvorgespannten Zylinder 84 befestigt ist, wobei der Zylinder 84 verschiebbar innerhalb einer entsprechenden Bohrung 86 im Befestigungsgehäuse 88 der Übergabeeinrichtung 32 angeordnet ist. Die entsprechende Feder 90, die den Zylinder 84 nach oben vorspannen, sind aus der Zeichnung der Fig. 8 sowie schematisch aus der Zeichnung der Fig. 9 ersichtlich.

An den oberen Enden der federbelasteten Sperrhebel 70, 72 sind jeweilige Querstifte 92, 94 vorgesehen, die beim Zusammenfahren der Presse durch entsprechende Steuerkanten 96, 98 der Annahmeeinrichtung 34 auseinandergedrückt werden können, um den Weg für die weitere Förderung der Befestigungselemente 56 freizugeben.

Aus dem oberen Teil der Darstellung der Fig. 7 ist ersichtlich, daß die Annahmeeinrichtung einen Führungskanal 100 aufweist, der mit dem Förderschlauch 36 der Fig. 1 ausgerichtet ist. Sowohl der Führungskanal 100 wie auch der Führungsschlauch 36 sind in dieser Darstellung mit Befestigungselementen 56 gefüllt.

Es ist aber auch möglich, daß einzelne Elemente im Zeitraum, wo die beiden Hälften der Übergabeeinrichtung verbunden sind, durch den Zuführkanal geschossen werden.

Fig. 8 zeigt, wie bereits erwähnt, einen Schnitt durch die Zeichnung der Fig. 7 entsprechend der Schnittebene VIII-VIII. Hieraus sieht man, daß die Annahmeeinrichtung 34 zwei federbelastete Greifer 102, 104 aufweist, die jeweils um eine Schwenkachse 106, 108 schwenkbar angelenkt und durch eine jeweilige Druckfeder 110 bzw. 112 so vorgespannt sind, daß sie am unteren Ende aufeinander zu vorgespannt sind. Hiermit wird verhindert, daß die Befestigungselemente 56 aus dem Führungskanal 100 der Annahmeeinrichtung 34 herausfallen. Gleichzeitig haben sie die Funktion, sicherzustellen, daß Elemente, die unmittelbar vor dem Trennen der beiden Hälften der Übergabevorrichtung fast aus dem Haltebereich der Haltefinger 70/72 ausgetreten sind, zu packen und zusammen mit der oberen Hälfte der Übergabeeinrichtung wegzutransportieren. Hierdurch kann erfindungsgemäß zuverlässig sichergestellt werden, daß keine Befestigungselemente bei der Übergabe verloren gehen, was gefährlich wäre, weil es zu einer Havarie im Preßwerk führen könnte, d.h. die Befestigungselemente sind bei der Übergabe entweder zuverlässig von den Sperrhebeln 70/72 zurückgehalten oder sie werden zuverlässig von dem Greifer 102, 104 ergriffen, aus den Sperrhebeln gezogen und von den Greifern während des nächsten Pressenzykluses bis zur nächsten Übergabe gehalten und erst dann unter dem Förderdruck in die Führung 36 übergeben. Die Schrauben 114 dienen der Befestigung der Annahmeeinrichtung 34 am oberen Werkzeug 12.

Die Befestigungselemente 56 sind nur im teilgeschnittenen Zustand gezeigt. Es handelt sich in diesem Beispiel um die RND-Mutter von Profil. Es könnte sich jedoch um beliebige Befestigungselemente handeln.

Fig. 10 zeigt die Greifer 102, 104 der Fig. 8 von unten in Pfeilrichtung X gesehen.

Die Fig. 11 und 12 zeigen die gleichen Querschnitte wie die Fig. 7 und 8, jedoch in teilweise zusammengefahrenen Zustand der Presse. Hier sind die federbelasteten Sperrhebel 70 und 72 durch die jeweiligen Steuerkanten 96, 98 voneinander weggedrückt, so daß die Befestigungselemente nunmehr unter dem Förderdruck aus dem Führungskanal 82 der Übergabeeinrichtung 32 in den Führungskanal 100 der Annahmeeinrichtung 34 gedrückt werden können.

Der Funktionsablauf im Betrieb der Vorrichtung nach den Fig. 7 bis 12 ist wie folgt:

Eingerichtet wird im zusammengefahrenen Zusand des Werkzeuges (siehe Fig. 11, 12 und 13). Dabei fahren die Annahmeeinrichtung 34 und die Übergabeeinrichtung 32 ineinander. Es werden so lange Befestigungselemente 56 gefördert, bis alle Kanäle im oberen und unteren Teil der Presse mit Befestigungselementen gefüllt sind. Die federbelasteten Greifer 102, 104 in der Annahmeeinrichtung 34 werden dabei durch den Förderdruck der Elementsäule gesteuert. Die federbelasteten Sperrhebel 70, 72 in der Übergabeeinrichtung 32 werden durch die Steuerkanten 96, 98 der Annahmeeinrichtung 34 aufgesteuert. Sobald der Beladezyklus abgeschlossen ist, wird der Förderdruck weggenommen, beispielsweise durch Ausschalten des Sortier- und Fördergeräts 26. Die oberen und unteren Werkzeuge 12 bzw. 16 werden auseinandergefahren. Das oberste Element 56 in der Übergabeeinrichtung 32 wird durch die Greifer 102, 104 der Annahmeeinrichtung 34 aus den Sperrhebeln 70, 72 heraus gezogen. Ein Verlust von Befestigungselementen aus dem Führungskanal 82 wird durch die federbelasteten Sperrhebel verhindert. Ebenso kann das unterste Element aus der Annahmeeinrichtung 34 nicht herausfallen, da dies durch die federbelasteten Greifer 102, 104 verhindert wird.

Jedesmal, wenn das Werkzeug zusammenfährt, wird die benötigte Anzahl an Befestigungselementen 56 nachgefördert. Die Elementübergabe ist im unteren Werkzeug 16 gefedert (durch die Feder 90), damit die Übergabe über einen entsprechenden Fahrweg des oberen Werkzeugs der Presse stattfinden kann und eine ausreichend lange Zeit für die Elementenübergabe zur Verfügung steht. Dies bedeutet, daß keine Beschränkung der Arbeitsgeschwindigkeit der Presse für die Elementenübergabe erforderlich ist. Die Presse kann vielmehr mit der maximal vorgesehenen Geschwindigkeit weiterlaufen.

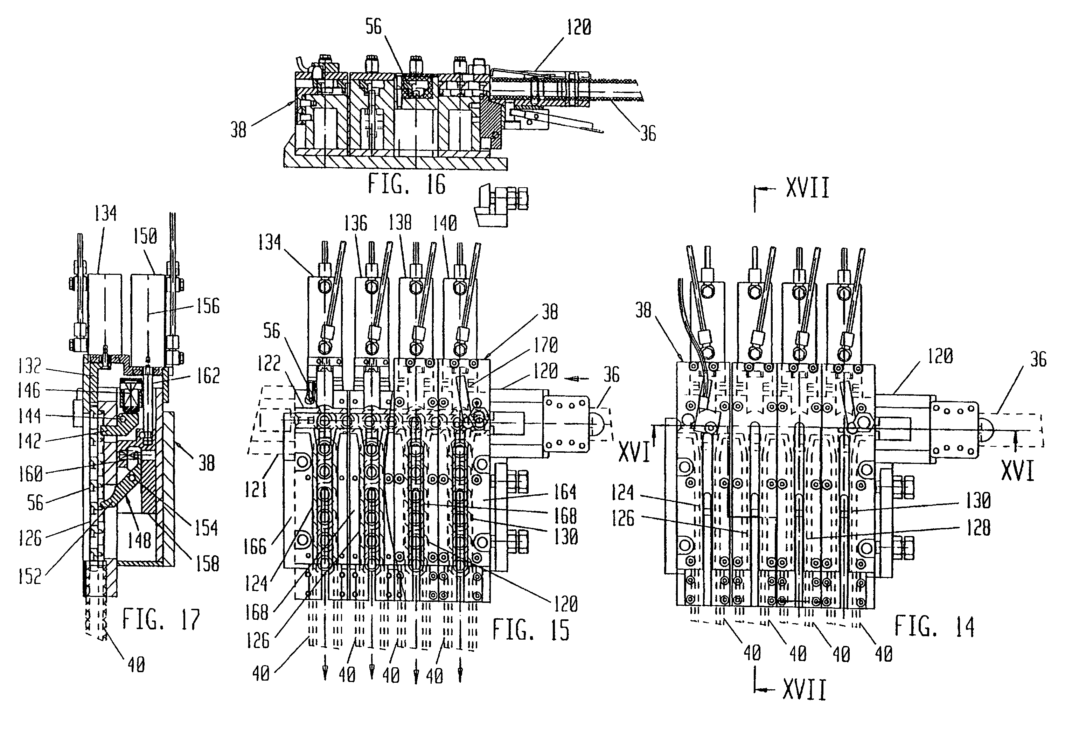

Eine erste erfindungsgemäße Variante einer Verteilerstation wird nunmehr nachfolgend anhand der Fig. 14 bis 17 erläutert. Wie bisher wird der von der Annahmeeinrichtung kommende Förderschlauch mit dem Bezugszeichen 36 gekennzeichnet, wobei nur das der Verteilerstation 38 zugeordnete Ende des Förderschlauchs 36 gezeigt ist. Der Schlauch 36 wird über einen Schnellspannverschluß 120, der an sich bekannt ist, an der Verteilerstation 38 angeschlossen. Im angeschlossenen Zustand fluchtet der Kanal des Führungsschlauches 36 mit einem Einlaufkanal 122 der Verteilerstation, die - wie in Fig. 15 ersichtlich - mit Befestigungselementen vollgefüllt ist. Die Verteilerstation 38 der Fig. 14 bis 17 weist vier Ausgangskanäle 124, 126, 128, 130 auf, die in jeweiligen Förderschläuchen 40 gemäß Fig. 2 münden, wobei nur die Eingangsenden der Schläuche 40 in Fig. 14, 15 und 17 gezeigt sind.

Die weitere Auslegung der Verteilerstation 38 geht aus folgender Figurenbeschreibung hervor.

Auf der Eingangsseite der Verteilerstation 38 wird die Schlauchkupplung 120 befestigt. Bei der hier gezeigten Ausführung erfolgt dies auf der rechten Seite der Verteilerstation 38. Diese ist aber symmetrisch ausgebildet, so daß die Schnellkupplung 120 auch auf der linken Seite der Verteilerstation angeschlossen werden könnte, wie schematisch mit dem Bezugszeichen 121 auf der linken Seite der Fig. 15 gezeigt. Die Befestigungselemente 56 werden vom Schlauch 36 kommend über die Schnellkupplung 120 (bzw. 121) in den Einlaufkanal 122 der Verteilerstation 38 geschoben und zwar üblicherweise unter dem Förderdruck, der im zusammengefahrenen Zustand der Presse vom Sortier- und Fördergerät 26 ausgeht.

Quer zum Einlaufkanal 22 angeordnete Schieber 132 (Fig. 17) verteilen die Elemente je nach Bedarf auf die einzelnen Ausgangskanäle 124 bis 130, wobei jeweilige Schieber 132 für jeden Ausgangskanal 124 bis 130 vorgesehen sind. Die Betätigungskraft für die Schieber 132 erfolgt über den jeweiligen pneumatischen Betätigungszylinder 134, 136, 138 und 140. Anstatt pneumatische Zylinder zu verwenden könnten auch hydraulische Zylinder oder andere Antriebseinrichtungen, wie beispielsweise Servomotoren, verwendet werden. Die Ansteuerung der Betätigungseinrichtung erfolgt über eine entsprechende Steuerung, die zweckmäßigerweise mit der Pressensteuerung synchronisiert ist oder von dieser aus angesteuert wird.

Drei Bedingungen müssen erfüllt sein, bevor ein Querschieber 132 betätigt wird. Erstens muß der Einlaufkanal 122 vollständig mit Elementen gefüllt sein. Zweitens muß im jeweiligen Ausgangskanal 124-130 mindestens Platz für ein weiteres Element sein. Drittens sollte auf der Befestigungselementenreihe im Einlaufkanal kein bzw. nur ein geringer Förderdruck ausgeübt werden.

Beim Betätigen des Querschiebers 132 wird jeweils ein oder mehrere Befestigungselemente 56 über eine federbetätigte Sperrklinke 142 in den jeweiligen Ausgangskanal (126 in Fig. 17) geschoben. Die Sperrklinke 142 ist schwenkbar angelenkt bei 144. Die Federvorspannung ist mit dem Bezugszeichen 146 gekennzeichnet. Die Sperrklinken 142 haben zwei Funktionen: sie stellen einerseits sicher, daß die Elemente in den Ausgangskanälen verbleiben und andererseits verhindern sie ein seitliches Ausbrechen der Befestigungselemente beim Einschieben in den Einlaufkanal.

Jeder Ausgangskanal 124-130 besitzt eine jeweilige Vorschubeinheit 148, die für den Weitertransport der Befestigungselemente 56 verantwortlich ist. Jede Vorschubeinheit 148 besteht aus einem pneumatischen Zylinder 150, der über einen federbelasteten Kipphebel 152 die Befestigungselemente 56 in Richtung Ausgang, d.h. in Richtung des jeweiligen Förderschlauches 40, schiebt. Das Bezugszeichen 154 gibt die Schwenkachse des Kipphebels 52 an und ist an einem in Achsrichtung 156 des pneumatischen Zylinders 150 beweglichen Wagen 158 angebracht. Die Federvorspannung wird durch die Druckfeder 160 erzeugt. Das Bezugszeichen 162 zeigt die Betätigungsstange des pneumatischen Zylinders 150, die mit dem hin- und herverschiebbaren Wagen 158 verbunden ist.

Beim Ausfahren der Kolbenstange 162 werden der Wagen 158 und der federbelastete Kipphebel 152 in Fig. 17 nach unten verschoben, wodurch die Befestigungselemente 56 vor dem Kipphebel 152 in den Schlauch 40 heineinbefördert werden. Die Verschiebung erfolgt schrittweise, entsprechend der Ansteuerung des pneumatischen Zylinders 150, der auch hier durch einen hydraulischen Zylinder oder einen elektrischen Antrieb ersetzt werden könnte. Der Kipphebel 152 kann im Uhrzeigersinn um die Schwenkachse 154 nicht weiter schwenken in der Darstellung gemäß Fig. 17, da dies durch den Wagen 158 verhindert wird. Ist der Wagen 158 zum unteren Ende der Verteilerstation gelangt (Fig. 17), wird der pneumatische Zylinder 150 umgesteuert und der Wagen 154 kehrt zurück in die Ausgangsposition benachbart zum Einlaufkanal. Bei dieser Rückwärtsbewegung kann sich der Kipphebel 152 entgegen dem Uhrzeigersinn unter Kompression der Druckfeder 160 drehen und somit an die Säule vom Befestigungselement 56 vorbeigleiten.

An dieser Stelle soll darauf hingewiesen werden, daß die anscheinend vertikale Anordnung gemäß Fig. 14, 15 und 17 allein durch die zeichnerische Darstellung gegeben ist. In der Tat wird diese Ausführungsform üblicherweise horizontal betrieben (obwohl eine beliebige andere Anordnung nicht ausgeschlossen wäre), d.h. die Ausgangskanäle 124-130 liegen horizontal und nicht vertikal, wie man eventuell fälschlicherweise aufgrund der Zeichnung meinen könnte.

Die Verteilerstation 38 ist modular aufgebaut, d.h. sie besteht aus einem Anfangsmodul 164 und einem Endmodul 166 (Fig. 15) mit einer gewünschten Anzahl von Zwischenmodulen 168, von denen zwei in Fig. 15 vorgesehen sind. Somit lassen sich, entsprechend der gewünschten Anzahl von Stanz- bzw. Setzköpfen 20, d.h. entsprechend der gewünschten Anzahl von Ausgangskanälen 124-130, beliebige Verteilerstationen 38 zusammenbauen bzw. erweitern.

Nimmt man beim Zuführen der Befestigungselemente 56 den Förderdruck weg, versucht sich die Elementsäule zu entspannen. Aus diesem Grund ist ein Druckstück 170 vorhanden, das verhindert, daß sich die Reihe von Befestigungselementen wieder aus der Verteilerstation 38 heraus bewegt.

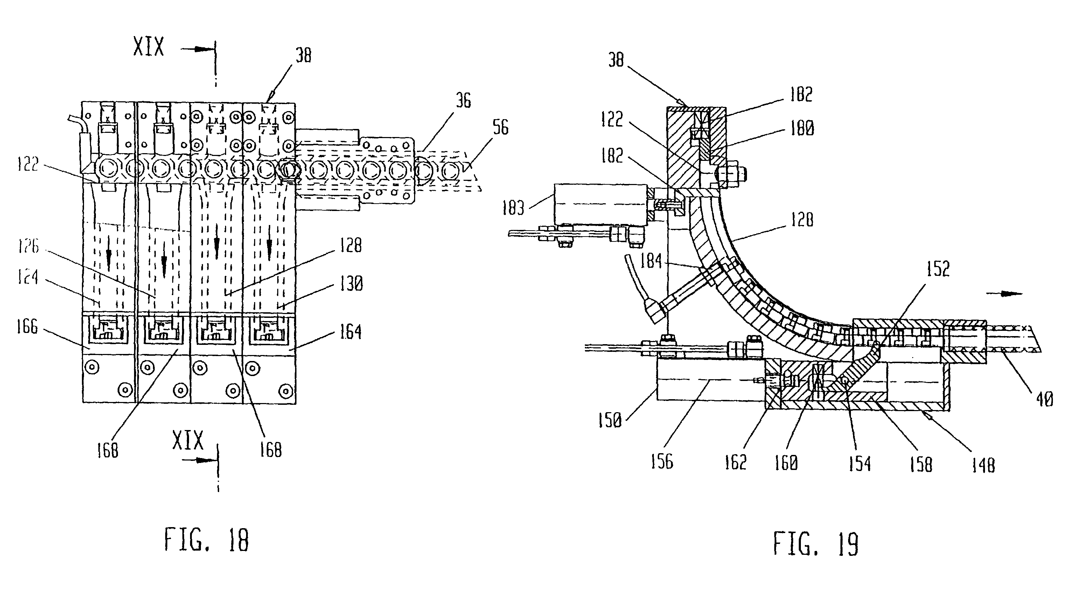

Eine weitere erfindungsgemäße Variante der Verteilerstation ist in den Fig. 18 und 19 dargestellt. Die Funktionsweise dieser Ausführung ist analog zur Verteilerstation 38 gemäß den Fig. 14 - 17, weshalb für entsprechende Teile entsprechende Bezugszeichen verwendet sind, eine Praxis, die für alle Ausführungsformen der vorliegenden Erfindung benutzt wird, so daß Teile, die mehrfach vorkommen, nur einmal beschrieben werden müssen. Man versteht, daß die bisherige Beschreibung auch für andere Ausführungsformen mit den gleichen Bestandteilen mit entsprechenden Bezugszeichen gilt. Es sind vor allem die folgenden Unterschiede gegenüber der Ausführungsform der Fig. 14-17 festzustellen:

Zunächst erfolgt bei der Ausführungsform gemäß den Fig. 18 und 19 die Zuführung der Befestigungselemente 56 von dem horizontalen Einlaufkanal 122 vertikal in die jeweiligen Ausgangskanäle 124 bis 130. Diese Ausgangskanäle sind nicht nur vertikal angeordnet, sondern auch gekrümmt, so daß sie am Ausgangsende horizontal verlaufen, was aus der Fig. 19 für den Ausgangskanal 128 ersichtlich ist.

Die Befestigungselemente 56 werden nicht pneumatisch in die einzelnen Ausgangskanäle 124-130 geschoben, sondern fallen, unterstützt durch federbelastete Druckstücke 180, infolge der Schwerkraft in die jeweiligen Ausgangskanäle, vorausgesetzt, daß ein pneumatisch betätigter Sperrschieber 120 den entsprechenden Ausgangskanal, beispielsweise 128, freigibt.

Die Druckfeder für das Druckstück 180 ist mit dem Bezugszeichen 182 angedeutet. Beim Füllen des Einlaufkanals 122 wird das Druckstück 180 (ein Druckstück pro Ausgangskanal) unter dem Füll- bzw. Förderdruck etwas nach oben verschoben und komprimiert auf diese Weise die entsprechende Feder 182. Beim Öffnen der Sperrschieber 182 entspannt sich die jeweilige Feder 182 und schiebt das Druckstück 180 geringfügig nach unten, wodurch das entsprechende Befestigungselement einen Impuls erhält, der die Förderung in den jeweiligen Ausgangskanal unterstützt. Diese Anordnung hat den weiteren Vorteil, daß das Druckstück 180 sich jetzt etwas nach unten bewegt hat und somit verhindert, daß benachbarte Befestigungselemente, die sich zwar im Einlaufkanal 122 befinden, jedoch nicht mit dem Ausgangskanal 128 ausgerichtet sind, in den Kanal nachfallen. Die Verschiebung der Befestigungselemente innerhalb des Einlaufkanals 122 kann nur dann erfolgen, wenn von außen, beispielsweise über den Schlauch 136, ein entsprechender Druck ausgeübt wird.

Am unteren Ende der Ausgangskanäle 124-130 befinden sich Vorschubeinrichtungen 148, die im Prinzip die gleiche Ausbildung und Funktion haben, wie mit Bezug auf die Teile 148, 150, 152, 154, 156, 158, 160 und 162 im Zusammenhang mit der Ausführungsform gemäß den Fig. 14-17 erläutert wurde. Da die Funktion hier identisch ist, wird sie nicht nochmals erörtert. Auch bei der Ausführungsform gemäß den Fig. 18 und 19 ist die Verteilerstation 38 modular aufgebaut, d.h. sie weist ein Anfangsmodul 164, ein Endmodul 166 und zwei Zwischenmodule 168 auf.

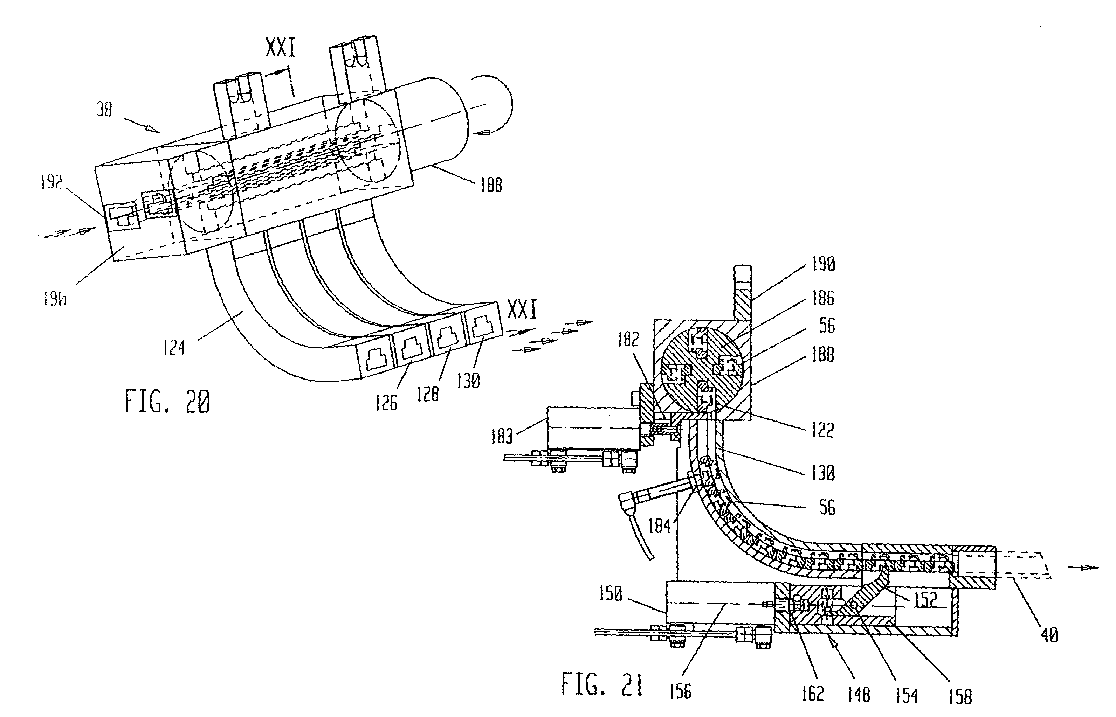

Eine dritte erfindungsgemäße Variante einer Verteilerstation ist in den Fig. 20 und 21 gezeigt. Hier wird die Verteilung der Elemente 56 mit Hilfe einer Drehtrommel 186 vorgenommen, die von einem Servomotor 188 schrittweise gedreht bzw. angesteuert wird. Wie aus Fig. 21 ersichtlich, weist in dieser Ausführungsform die Drehtrommel 186 vier Einlaufkanäle 122 auf, die jeweils die erforderliche Anzahl an Befestigungselementen 56 aulweisen. Es müssen nicht zwangsläufig vier Einlaufkanäle sein, sondern es kann eine beliebige Zahl an Einlaufkanälen vorgesehen werden entsprechend der konstruktiven Bedingungen. Auch hier sind die Ausgangskanäle 124-130, von denen nur der Ausgangskanal 130 in Fig. 21 gezeigt ist, zunächst vertikal angeordnet und gehen dann über einen gekrümmten Bereich in die Horizontale über, wo sie mit den Einlaufenden der jeweiligen Förderschläuche 40 ausgerichtet sind.

Vorausgesetzt daß die Drehtrommel 186 einen Einlaufkanal 122 in Ausrichtung mit den Ausgangskanälen 124-130 gebracht hat, können die Elemente durch ihr Eigengewicht in die Ausgangskanäle fallen, sobald der Sperrschieber 182, nach Ansteuerung durch den pneumatischen Betätigungszylinder 183, geöffnet wird. Der Betätigungszylinder 183 muß nicht pneumatisch arbeiten, er kann auch hydraulisch arbeiten oder durch einen anderen Antrieb, beispielsweise einen elektrischen Antrieb, ersetzt werden.

Die Weiterbeförderung der Befestigungselemente in die jeweiligen Förderschläuche 40 hinein wird von jeweiligen Vorschubeinheiten 148 vorgenommen, die identisch sind mit den entsprechenden Einheiten in Fig. 19, d.h. so ähnlich aufgebaut sind wie die Vorschubeinheiten der Fig. 17, weshalb diese Einheiten hier nicht mehr beschrieben werden.

Das Gehäuse 188 der Verteilerstation 38 kann mittels Laschen am oberen Werkzeug 12 der Presse angebracht werden. Das quadratische Gehäuse 188 kann über die gleichen Laschen ebenfalls am unteren Werkzeug 16 angebracht werden, oder an einer Zwischenplatte der Presse.

An der einen Stirnseite 190 des Gehäuses 188 befindet sich ein Zufuhrkanal 192, der mit dem Schlauch 36 (nicht gezeigt) über eine Schnellkupplung kommunizieren kann. Die einzelnen Einlaufpassagen 122 werden der Reihe nach in der entsprechenden Drehposition der Drehtrommel über diesen Zufuhrkanal 192 mit der erwünschten Anzahl an Befestigungselementen gefüllt.

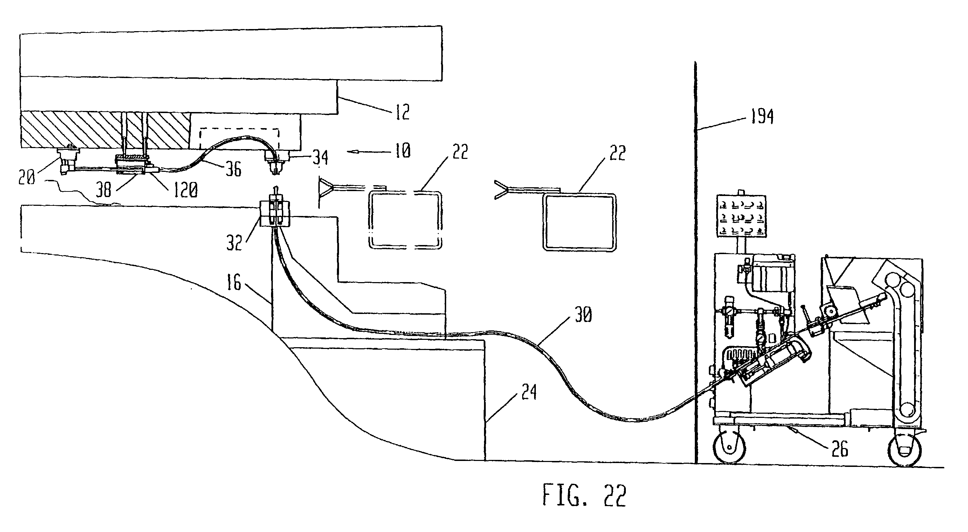

Schließlich zeigt Fig. 22 eine Anordnung, die der Anordnung gemäß Fig. 1 sehr ähnlich ist. Der Unterschied liegt nur darin, daß sich hier das Sortier- und Fördergerät 26 nicht auf dem Werkzeugwechselwagen 24 befindet, sondern als separate Einheit außerhalb des Schutzgitters 194 der Presse steht.

Es soll darauf hingewiesen werden, daß die einzelnen Bestandteile der bisher beschriebenen Ausführungsformen für sich als erfinderisch und nützlich angesehen werden. Beispielsweise können die Übergabeeinrichtung 32 und die Annahmeeinrichtung 34 mit einem einzelnen Setzkopf wie 20 über eine Führung wie 36 direkt kommunizieren, wenn nur ein einzelner Setzkopf vorhanden ist. Das heißt die Verteilerstation ist nicht zwingend notwendig. Mit anderen Worten muß die Verteilerstation nicht in Kombination mit der Übergabeeinrichtung 32 und der Annahmeeinrichtung 34 benutzt werden.

Wenn, was durchaus möglich ist, die Verteilerstation 38 auf dem unteren Werkzeug 16 montiert ist, kann der Förderschlauch 30 vom Sortier- und Fördergerät 26 direkt in die Verteilerstation 38 hineingeführt werden bzw. an dieser über den Schnellverschluß 120 befestigt werden. Die Übergabeeinrichtung 32 und die Annahmeeinrichtung 34 sind dann überflüssig. Dies trifft auch zu, wenn die Verteilerstation am oberen Werkzeug 12 befestigt ist und der Förderschlauch 30 an das obere Werkzeug 12 herangeführt wird, was ebenfalls denkbar ist.

In der bisherigen Figurenbeschreibung sind zwar nur Mutterelemente gezeigt. Die Erfindung kann aber genauso mit Bolzenelementen verwendet werden oder gar mit anderen Elementen, die eventuell mit einem Stanz- bzw. Setzkopf eingesetzt werden. Bei den dargestellten Ausführungsformen findet stets eine sogenannte schiebende Förderung vom Sortier- und Fördergerät durch die Förderschläuche bis zu den Stanz- und Setzköpfen statt.

Es käme aber genauso eine sogenannte schießende Förderung in Frage, die häufig mit Bolzenelementen verwendet wird. Die schießende Förderung wird in diesem Fall benutzt, um die lange Übertragungsstrecke vom Sortier- und Fördergerät bis zu der Übergabeeinrichtung bzw. bis zu der Verteilerstation zu überbrücken. Es wird dann beispielsweise ab dem Zufuhrkanal der Verteilerstation entweder eine schießende Förderung oder eine schiebende Förderung benutzt, um die Bolzenelemente zu den einzelnen Stanz- und Setzköpfen zu befördern.

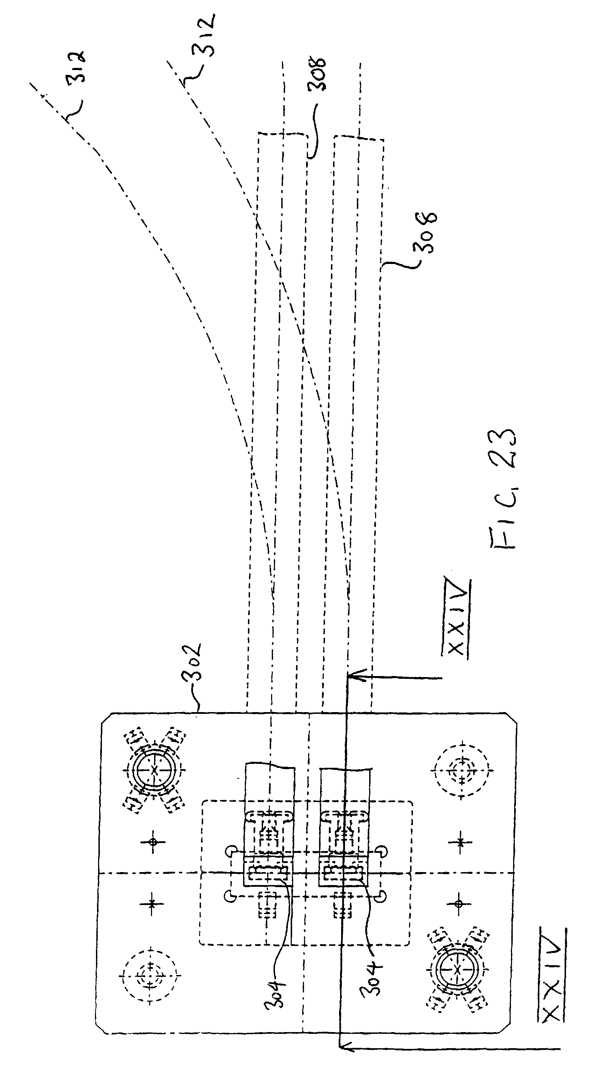

Ein weiteres Beispiel einer Anordnung zur vertikalen Übergabe von Befestigungselementen wird nunmehr unter Bezugnahme auf die Figuren 23-26 beschrieben.

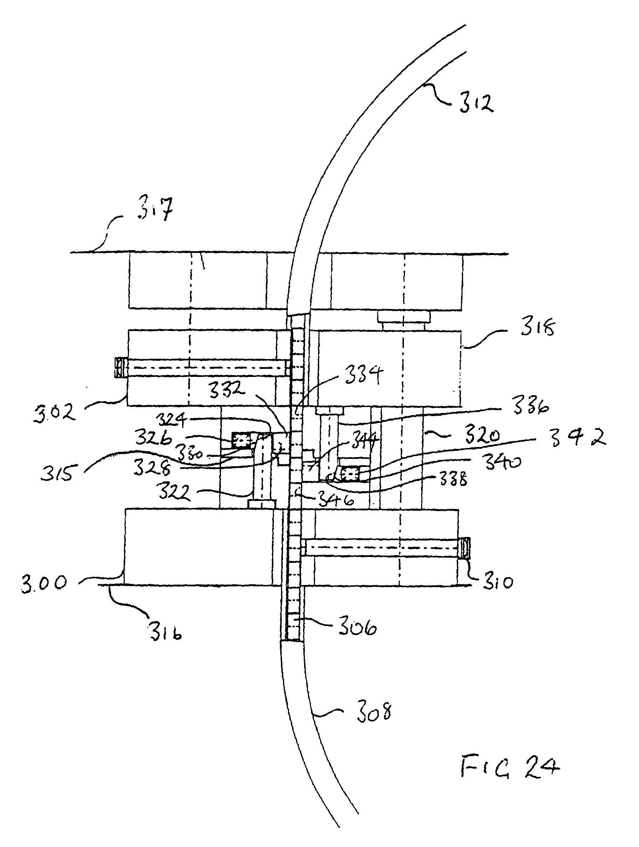

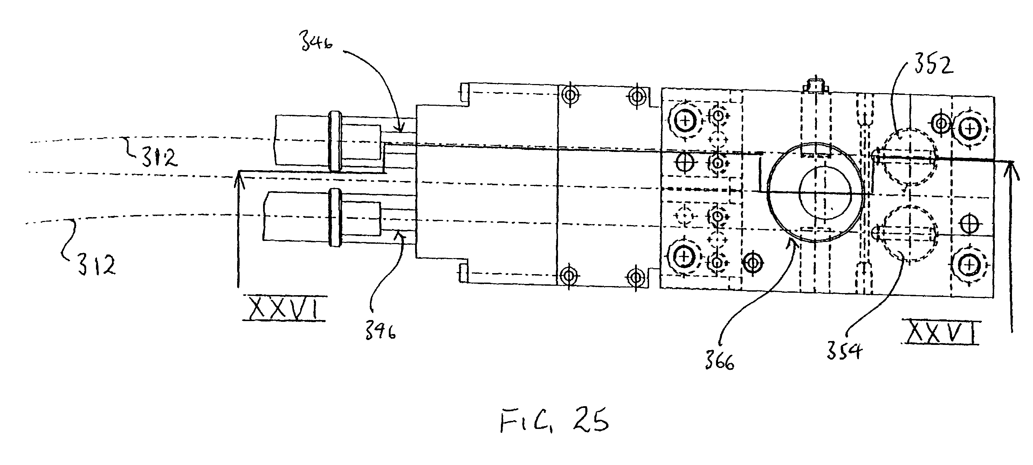

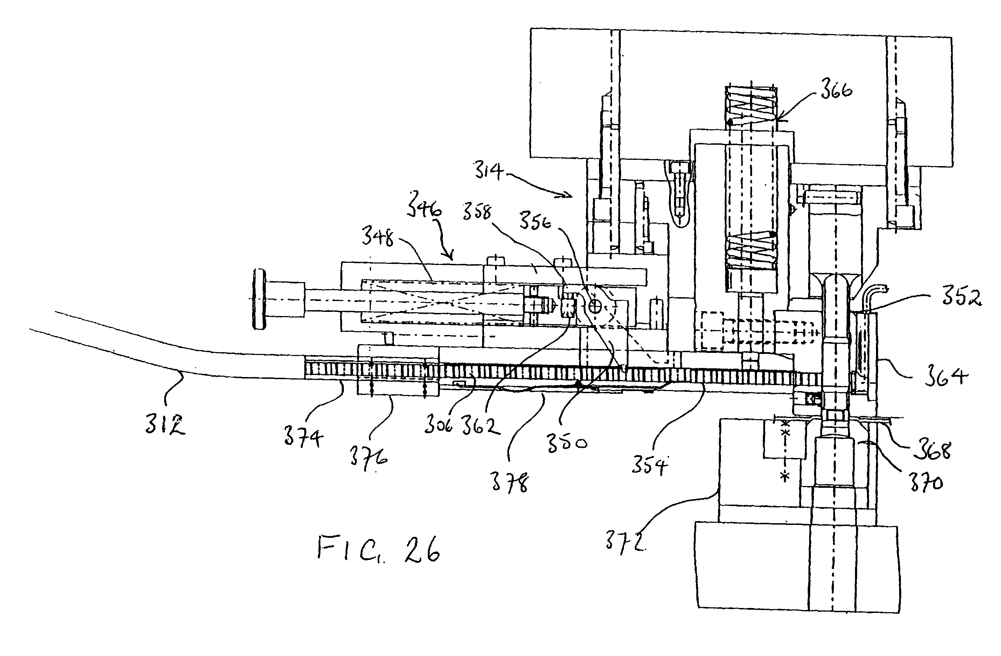

Die Figuren 23 und 24 zeigen in einer Draufsicht und in einem schematischen Querschnitt die Zusammenarbeit einer Übergabeeinrichtung 300 mit einer Annahmeeinrichtung 302, die erfindungsgemäß für die vertikale Übergabe von Elementen ausgelegt sind. Diese beiden Einrichtungen sind in diesem Beispiel zweibahnig ausgeführt, d.h. sie bestehen aus zwei nebeneinander angeordneten Zuführkanälen 304 für, in diesem Beispiel, Mutterelemente 306. Das Bezugszeichen 308, das in Figur 23 zweimal zu sehen ist, deutet auf zwei getrennte Führungsschläuche, die von einem zweibahnigen Sortier- und Fördergerät kommen, das in Figur 23 nicht zu sehen ist, jedoch an sich bekannt ist und beispielsweise nach der oben erwähnten deutschen Patentanmeldung 19709714.6 der Fa. Profil Verbindungstechnik GmbH & Co. KG ausgebildet sein kann. Die Zuführschlaüche 308 sind in der Übergabeeinheit mittels Stiften wie 310befestigt. Aufgrund der Schnittzeichnung ist lediglich einer der Zuführschläuche 308 in Figur 24 zu sehen. Das Bezugszeichen 312 der Figur 24 zeigt einen Zuführschlauch, der die Mutterelemente 306 von der Annahmeeinrichtung 302 zu dem Stanz- und Setzkopf 314 der Figuren 25 und 26 führt. Wie aus diesen Figuren ersichtlich, sind auch zwei Zuführschläuche 312 vorgesehen, da auch der Stanz- und Setzkopf 314 zweibahnig ausgeführt ist, was später näher beschrieben wird.

Die Übergabeeinrichtung 300 ist in diesem Beispiel wiederum am unteren Werkzeug der Presse bzw. am Werkzeugwechselwagen 316 befestigt, während die Annahmeeinrichtung 302 an einer Zwischenplatte 318 der Presse befestigt ist. Die Zwischenplatte 318 ist an Führungssäulen wie 320 verschiebbar geführt, die sich zwischen der oberen Platte 317 der Presse und dem unteren Werkzeug erstrecken.

Die Vorrichtung ist in Fig. 24 in der geschlossenen Stellung gezeigt, d.h. auch die Presse ist geschlossen. Während der Öffnung der Presse trennen sich die Übergabeeinrichtung 300 und die Annahmeeinrichtung 302 in der Mitte an der Trennlinie 315 unterhalb des später zu beschreibenden Querschiebers 328 und oberhalb des später ebenfalls zu beschreibenden Querschiebers 344, und die Führungssäule 320 entfernt sich aus der Übergabeeinrichtung 300. Die Trennung der Annahmeeinrichtung 302 von der Übergabeeinrichtung 300 und die Entfernung der Führungssäule 320 aus der Übergabeeinrichtung 300 wird soweit betrieben, daß ein ausreichender Abstand geschaffen ist, durch den das Blechteil oder entsprechende, dieses bewegende Greifereinrichtungen ungehindert zwischen der Übergabeeinrichtung 300 und der Annahmeeinrichtung 302 hindurch passieren können.

Die Übergabeeinrichtung 300 weist für jede Bahn einen Steuerschieber 322 mit einer schrägen Steuerkante 324 auf. Der Steuerschieber 322 greift beim Schließen der Presse in den mittels einer Druckfeder 326 vorgespannten Querschieber 328 der Annahmeeinrichtung 302 und arbeitet dort mit einer entsprechenden schrägen Fläche 330 zusammen, so daß beim Schließen der Presse der Zwischenplattenhub ausreicht, um über die zwei zusammenarbeitenden Schrägflächen 324 und 330 des Steuerschiebers 322 und des Querschiebers 328, um den Querschieber aus der Bahn der Mutter zu entfernen. Bei geöffneter Presse verhindert dieser Querschieber 328 nämlich, daß Mutterelemente 306 aus dieser Bahn nach unten fallen. Dies kann dadurch verhindert werden, daß der Querschieber 328 mit seiner Nase 332 entweder den Führungsabschnitt 334 selbst sperrt oder ein Mutterelement fest an der gegenüberliegenden Wand des Führungsabschnittes klemmt und hierdurch den Führungsabschnitt 334 sperrt.

Die Annahmeeinrichtung 302 weist einen entsprechenden Steuerschieber 336 für jede Bahn auf und diese weisen wiederum eine schräge Steuerfläche 338 auf, welche mit einer entsprechenden schrägen Fläche 340 des ebenfalls mittels einer Druckfeder 342 vorgespannten Querschiebers 344 der Übergabeeinheit 300 zusammenarbeitet. Der Querschieber 344 sorgt dafür, entsprechend der Funktion des Querschiebers 332, daß im geöffneten Zustand der Presse der Zuführkanal der Übergabeeinrichtung gesperrt ist, so daß Mutterelemente 306 durch den Förderdruck des Fördergerätes nicht unerwünscht aus dem Kanal herausgedrückt werden können.

Wie angedeutet, bestehen für jeden Kanal zwei Steuerschieber 336 und. 322 mit entsprechenden Querschiebern 332 bzw. 344, die unmittelbar übereinander angeordnet sind damit keine freie Elementen dazwischen liegen die verloren gehen könnten. D.h. die Übergabe- und Annahmeeinrichtungen sind modular ausgebildet und es können durch Ausnutzung der modularen Bauweise auch mehrere Führungsbahnen 304 nebeneinander angeordnet werden. Wichtig ist, daß im geöffneten Zustand der Presse die Querschieber 328 bzw. 344 den vertikalen Befestigungselementkanalabschnitte 334 bzw. 346 sowohl der Übergabeeinrichtung 300 als auch der Annahmeinrichtung 302 sperren, jedoch beim Schließen der Presse werden die Querschieber 341 und 351 aus den jeweiligen Abschnitten 334 und 346 des Führungskanals entfernt, sobald sichergestellt ist, daß der untere Kanalabschnitt 346 mit dem oberen Kanalabschnitt 334 flüchtet und unmittelbar in diesen einmündet, so daß Befestigungselemente beim Übergang von der Übergabeeinrichtung in die Annahmeeinrichtung nicht verlorengehen können. Durch die gefederte Zwischenplatte bleiben die Übergabeeinrichtung und die Annahmeeinrichtung über einen ausreichenden Zeitraum in Anlage aneinander, daß die Mutterelemente zuverlässig übergeben werden können. D.h. diese Anlage besteht nicht nur für einen Augenblick in UT der Presse an sondern länger.

Auch hier besteht der Vorteil, daß die federvorgespannten Querschieber 328 und 344 den jeweiligen Kanalabschnitt 334 bzw.346 zuverlässig sperren und verhindern, daß bei der vertikalen Übergabe Mutterelemente 306 verlorengehen. Da die Führungskanalabschnitte in die gleiche Richtung weisen wie die Pressenwerkzeuge aufeinander zu und voneinander wegbewegen, wird automatisch erfindungsgemäß ein Zustand vermieden, bei dem Mutterelemente 306 bei der Übergabe verkantet werden, was eine Hauptursache für das Verlorengehen eines Elements bei der Übergabe darstellt.

Auch hier sorgt die gefederte Zwischenplatte dafür, daß ausreichend Zeit bleibt für die Übergabe der erforderlichen Anzahl von Elementen 306, obwohl die Presse nur für einen Augenblick in UT geschlossen ist, d.h. die Übergabezeit kann unter Ausnutzung der gefederten Zwischenplatte ausreichend lang gewählt werden.

Obwohl der Förderdruck in den Förderschläuchen 308,312 auch genutzt werden könnte, um die Befestigungselemente in den zweibahnigen Stanzund Setzkopf 314 einzuführen, wird vorzugsweise dort eine Hilfsspeisung vorgesehen, welche in der Figur 26 gut zu sehen ist. Es handelt sich hier um eine Einrichtung, welche ähnlich der Einrichtung 42 der Figuren 5 und 6 ausgebildet ist, hier jedoch am Stanz- und Setzkopf 314 angebaut ist und das Bezugszeichen 346 aufweist. Genauer gesagt handelt es sich um eine Kraftquelle, hier als eine Feder 348 gezeigt, welche ein Vorschubglied 350 nach vorne zu verschieben versucht. Das Vorschubglied 350 greift in diesem Beispiel in die Bohrung eines Mutterelements 306 ein und übt eine in Richtung auf den Stößel 352 des Stanz- und Setzkopfs 314 zu gerichtete Kraft auf die Reihe 354 der Mutterelemente vor dem Stößel 352 aus. Daß bei 356 angelenkte Vorschubglied 350 wird durch den Arm 358 daran gehindert, in Uhrzeigerrichtung aus der dargestellten Stellung der Figur 26 zu schwenken. Wird die Vorschubbewegung nach vorne beendet und wird die Kraftquelle 348 erneut gespannt, was durch hydraulische oder pneumatische Mittel oder mechanisch über einen Steuernocken 360, welcher an einer nichtgezeigten schräggestellten Steuerkante während der Pressenhubbewegung entlang gleitet, erfolgen kann. Das Vorschubglied 350 wird dann beim Spannen der Vorschubquelle nach links in der Figur 25 bewegt und kann gegen den Uhrzeigersinn rotieren, damit es über die Oberfläche der Reihe der Mutterelemente gleiten kann. Diese Bewegung des Vorschubgliedes 350 gegen den Uhrzeigersinn wird durch die Feder 362 zugelassen, welche durch den vorspringenden Arm 358 des Vorschubgliedes bei dieser Bewegung zusammengedrückt wird. Durch die Anbringung dieser Zuführeinrichtung direkt am Setzkopf wird der Vorteil erreicht, daß die Mutterelemente bei jedem Hub der Presse zuverlässig unterhalb des Stößels 352 gebracht wird. Nach erneutem Spannen der Kraftquelle schwenkt das Vorschubglied 350 zurück in die die Mutter vorschiebende Position aufgrund der Kraft der Feder 362.

Die Arbeitsweise des Stanz- und Setzkopfes 314 liegt nicht im Vordergrund der vorliegenden Erfindung und ist an sich gut bekannt. Von Interesse hier ist, daß zwei Stößel 352 und 354' eng nebeneinander angeordnet sind und daß die Vorspannung des Blechniederhalters 364, der zum Stanzkopf gehört, durch eine Vorspanneinrichtung 366 für die beiden Stößel geliefert wird. Diese Anordnung ermöglicht es, zwei Mutterlemente 306 eng beieinander in das Blechteil 368 einzusetzen. Das Blechteil wird unterhalb der Stößel 352 und 354 von einer entsprechenden Matrize 370 im unteren Werkzeug 372 der Presse abgestützt. Der Stanzkopf 314 ist hier an der Zwischenplatte 318 befestigt. In Figur 26 sieht man auch, daß das der Annahmeeinrichtung 302 entgegengesetzte Ende 374 des Förderschlauches 312 über eine Schnellkupplung 376 an den Zuführkanal 378 der Vorschubeinheit 346, d.h. des Stanz- und Setzkopfes 314 angeschlossen ist.

Bei dieser Vorrichtung wird bei jedem Pressenhub vom Vorschubglied 350 ein Mutterelement in jedem Zuführkanal 378 nach vorne geschoben und bei jedem Pressenhub wird die Kraftquelle, d.h. die Feder 346 neu gespannt.

Schließlich zeigen die Figuren 27 und 28 die an sich bekannte Anordnung einer Großpresse. Solche Pressen werden beispielsweise dazu verwendet, um aus Blechteilen 408 ein ganzes Seitenteil 410 einer Karosserie von bis über 4 m Länge aus Blech herzustellen. Die Großpresse besteht aus mehreren paarweise angeordneten Säulen 400, welche das Pressenunterteil 402 mit dem Pressenoberteil 404 verbinden. Ein Antrieb 406, hier als Kurbelantrieb gezeigt, dient dazu, daß obere Werkzeug 412 der Presse auf und ab zu bewegen. Das untere Werkzeug 414 wird auf einem Werkzeugwechselwagen 416 montiert und der Werkzeugwechselwagen trägt auch seitlich Führungseinrichtungen 418 für Transferbalken 422, welche mit Greifereinrichtungen 423 ausgestattet sind und dazu dienen, die eingehende Blechteile 408 von einer Station der Großpresse zur nächsten zu bewegen wie in Figur 28 durch den Pfeil 424 gezeigt. In der Darstellung der Figur 28 wird das Blechteil in der Pfeilrichtung 426 durch die Presse bewegt, und zwar zwischen sechs Arbeitsstationen 428, 430, 432, 434, 436 und 438, wobei eine Zwischenstation 440 in der Mitte der Presse angeordnet ist. Hier findet eine Übergabe von den Transfereinrichtungen 422, 423 der Stationen 428 - 432 an die Transfereinrichtungen 422, 423 der Stationen 434 - 438 statt. An der Station 442 verläßt dann das Blechteil die Presse und man sieht hier den Umriß des Seitenteils 410 eines Pkw, daß auf der Palette 444 liegt und zur weiteren Verwendung dem Bereich der Presse entnommen werden kann. Die Seitenteile 410 auf den Paletten 444 sind entweder nur an wenigen Punkten mit der Blechumrandung verbunden oder bereits vollständig von dieser getrennt.

Auf der linken Seite der Presse sieht man eine zweite Garnitur von Werkzeugwechselwagen 416, die gesamthaft durch eine Bewegung in Pfeilrichtung 446 quer zur Längsrichtung der Presse (entsprechend dem Pfeil 424) in die Presse hineingeschoben werden können. Zuvor müssen natürlich die Werkzeugwechselwagen, die in den Stationen 428, 430, 432, 434, 436 und 438 vorhanden sind, aus der Presse entnommen werden, was durch die Pfeile 448 gezeigt ist. Auch die Sortier- und Fördergeräte 450 sind vorzugsweise am Werkzeugwechselwagen 416 bei einer Großpresse montiert. Diese Anordnung ist nur bei der letzten Arbeitsstation gezeigt, da Befestigungselementen üblicherweise erst in den letzten Arbeitsstationen angebracht werden, da das Blechteil dort seine Endform annimmt und die Elemente genau positioniert werden können, da das Fließen des Bleches abgeschlossen ist.

Man sieht aus der Beschreibung wie die Hin- und Herbewegung der Transferbalken 422 mit Greifer 423 entsprechend dem Pfeil 424 die Zuführung von Befestigungselementen erschweren, weil die Bewegung der Transferwagen mit den entsprechenden Greifeinheiten und Blechteilen mit den Zuführleitungen für die Befestigungselemente kollidieren würde wenn die Erfindung nicht wäre. Deshalb ist bei einer Großpresse die Anbringung der Sortier- und Fördergerat und der Übergabeeinrichtung am unteren Werkzeug der Presse bzw. am Werkzeugwechselwagen entsprechend der vorliegenden Erfindung eine sehr vorteilhafter Lösung. Eine Zufuhr der Befestigungselementen von außerhalb der Presse ist außerdem kaum möglich, da die Notwendigkeit besteht, von Zeit zu Zeit die Werkzeugwechselwagen mit den entsprechenden Werkzeugen auszuwechseln, entweder weil Wartungs- und Reparaturarbeiten notwendig sind oder weil eine neue Garnitur von Werkzeugen, beispielsweise für ein anderes Blechteil benutzt werden sollen. Die Werkzeugwechselwagen 416, die in Figur 28 links von der Presse warten, umfassen nicht nur die Werkzeugunterteile 414, sondern auch die Werkzeugoberteile, die nach dem Einfahren in den Pressenbereich automatisch von der oberen Platte der Presse ergriffen und angehoben werden. Auch dies stellt ein Hindernis dar, Schläuche und dergleichen von außen an die oberen Werkzeuge der Presse zu führen. Es soll auch gesagt werden, daß solche Großpressen im wesentlichen vollautomatisch ablaufen, Menschen sind im Bereich der Großpresse nicht zugelassen und die Arbeit der Großpresse ist meistens mittels Lichtschranken gegen Betreten gesichert.

Selbst wenn bei einer Großpresse die Übergabeeinrichtung am besten am unteren Werkzeug der Presse angeordnet ist, gibt es durchaus andere Pressenanordnungen wo eine Anbringung am oberen Werkzeug sinnvoll ist.

Das Bezugszeichen 454 deutet auf dem Boden der Pressenhalle hin und das Bezugszeichen 456 kennzeichnet das die Presse tragende Fundament. Während die Fig. 27 den Zustand nach der Auswechselung der ersten Garnitur der Werkzeuge 412, 414 auf dem Werkzeugwechselwagen 416 in Pfeilrichtung 448 zeigt, zeigt die Fig. 28 den Zustand vor dieser Auswechselung. Eine neue Garnitur kann in Pfeilrichtung 458 der Fig. 28 noch während die Presse arbeitet, eingefahren werden. Die "alte" Garnitur wird in Pfeilrichtung 406 ausgefahren. Der Antrieb 406 kann als gemeinsamer Antrieb für alle Arbeitsstationen realisiert werden.

## Patentansprüche

1. Verfahren zur Übergabe von Befestigungselementen (56,306) an Stanzköpfen (20,314) in einer Presse zum Einpressen der Befestigungselemente in plattenförmige Werkstücke, wobei die Befestigungselemente (56,306) von einem Fördergerät oder Sortier- und Fördergerät (26) über eine Führung (30,308) an die Presse herangeführt, in eine Übergabeeinrichtung (32,300) am Werkzeugunterteil (16,316) oder -oberteil (12,318) der Presse (10) gefördert und in eine Annahnmeeinrichtung (34,302) am jeweils anderen Werkzeugteil (12,318 bzw. 16,316) übergeben werden, **dadurch gekennzeichnet, daß** die Befestigungselementübergabe von der Übergabeeinrichtung (32,300) in die Annahmeeinrichtung (34,302) in die vertikale Richtung, d.h. in oder entgegengesetzt zur Schließrichtung der Presse erfolgt.

2. Verfahren nach Anspruch 1, **dadurch gekennzeichnet, daß** die Übergabe an das jeweils andere Werkzeugteil (12, 16) dann stattfindet, wenn die Presse (10) zusammengefahren ist, d.h. sich im UT befindet.

3. Verfahren nach Anspruch 2, **dadurch gekennzeichnet, daß** bei Inbetriebnahme der Presse (10) diese im UT stehenbleibt und alle sich im Werkzeugunterteil (16) und -oberteil (12) befindlichen Kanäle (30, 60, 82, 100, 36, 122, 124, 126, 128, 130, 140) mit Befestigungselementen (56) gefüllt werden.

4. Verfahren nach Anspruch 3, **dadurch gekennzeichnet, daß** nach der Füllung der genannten Kanäle (30, 60, 82, 100, 36, 122, 124, 126, 128, 130, 140) die Presse (10) im Automatikmodus betrieben wird und die erforderliche Nachfüllung mit Befestigungselementen (56) bei Bedarf dann durchgeführt wird, wenn sich die Presse (10) im Bereich vom UT befindet.

5. Verfahren nach einem der vorhergehenden Ansprüche, **dadurch gekennzeichnet, daß** die Befestigungselementübergabe vom Werkzeugunterteil (16) zum Werkzeugoberteil (12) erfolgt.

6. Verfahren nach einem der vorhergehenden Ansprüche, **dadurch gekennzeichnet, daß** es bei der Herstellung von Blechformteilen (18, 368) in Transferwerkzeugen durchgeführt wird.

7. Vorrichtung zur Übergabe von Befestigungselementen (56,306) an einen Stanzkopf (20,314) in einer Presse (10) zwecks Einpressen in plattenförmige Werkstücke (18,368) mit einer Übergabeeinrichtung (32, 300) und einer Annahmeeinrichtung (34, 302), wobei die Befestigungselemente (56,306) von einem Fördergerät oder Sortier- und Fördergerät (26) über eine Führung (30,308) an die Presse (10) herangeführt, in die Übergabeeinrichtung (32,300) am Werkzeugunterteil (16,316) oder - oberteil (12,318) der Presse (10) gefördert und in die Annahmeeinrichtung (34,302) am jeweils anderen Werkzeugteil (12,318 bzw.16,316) übergeben werden, **dadurch gekennzeichnet, daß** die Führungskanalabschnitte der Übergabeeinrichtung (32, 300) und der Annahmeeinrichtung (34, 302) in die gleiche Richtung ausgerichtet sind, wie sich die Pressenwerkzeuge aufeinander zu und voneinander weg bewegen, so daß die Übergabe der Befestigungselementen von der Übergabeeinrichtung (32,300) an die Annahmeeinrichtung (34,302) in vertikaler Richtung, d.h. in oder entgegengesetzt zur Schließrichtung der Presse (10) erfolgt.

8. Vorrichtung nach Anspruch 7, **dadurch gekennzeichnet, daß** die Übergabeeinrichtung (32, 300) und die Annahmeeinrichtung (34, 302) so ausgelegt sind, daß die Übergabe der Befestigungselemente im zumindest im wesentlichen geschlossenen Zustand der Presse erfolgt.

9. Vorrichtung nach Anspruch 7 oder 8, **dadurch gekennzeichnet, daß** eine Führungseinrichtung (36,312) von der Annahmeeinrichtung (34,302) zu einer Verteilerstation (38) oder zu einem Stanzkopf (314) führt.

10. Vorrichtung nach einem der Ansprüche 7, 8 oder 9, **dadurch gekennzeichnet, daß** eine federbelastete Sperre (70, 72) den Zuführkanal (82) der Übergabeeinrichtung (32) für die Befestigungselemente (56) an seinem vorderen Ende sperrt und daß eine Einrichtung (96, 98) vorgesehen ist, die diese federbelastete Sperre (70, 72) im zusammengefahrenen Zustand der Presse (10) zur Freigabe der vorgegebenen Anzahl von Elementen öffnet.

11. Vorrichtung nach Anspruch 10, **dadurch gekennzeichnet, daß** die Annahmeeinrichtung (34) und die Übergabeeinrichtung (32) im zusammengefahrenen Zustand der Presse ineinander gefahren sind.

12. Vorrichtung nach einem der Ansprüche 10 oder 11, **dadurch gekennzeichnet, daß** die Annahmeeinrichtung (34) federbelastete Greifer (102, 104) aufweist, die durch den Förderdruck der Befestigungselemente (56) in der Übergabeeinrichtung (32) aufgesteuert werden.

13. Vorrichtung nach Anspruch 12, **dadurch gekennzeichnet, daß** die Übergabeeinrichtung (32) als Sperre federbelastete Sperrhebel (70, 72) aufweist, die beim Ineinanderfahren der Annahmeeinrichtung (34) und der Übergabeeinrichtung (32) mittels einer Steuerkante (96, 98) aufgesteuert werden.

14. Vorrichtung nach Anspruch 13, **dadurch gekennzeichnet, daß** die Annahmeeinrichtung (34) derart ausgelegt ist, daß die Greifer (102, 104) beim Auseinanderfahren der Presse (10) das oberste Befestigungselement (56) in der Übergabeeinrichtung (32) aus den federbelasteten Sperrhebeln (70, 72) herausziehen.

15. Vorrichtung nach Anspruch 13 oder 14, **dadurch gekennzeichnet, daß** die Übergabeeinrichtung (32) einen federbelasteten, den federbelasteten Sperrhebel (70, 72) tragenden Zylinder (84) aufweist, der beim Zusammenfahren der Presse (10) nach unten gedrückt wird und beim Öffnen der Presse sich über einen vorbestimmten Weg mit der Annahmeeinrichtung (34) mitbewegt, um eine ausreichend lange Zeit für die Befestigungselementübergabe zur Verfügung zu stellen, ohne die Arbeitsgeschwindigkeit der Presse zu verlangsamen.

16. Vorrichtung nach Anspruch 7, **dadurch gekennzeichnet, daß** in der Übergabeeinrichtung (300) ein Querschieber (344) vorgesehen ist, welcher im geöffneten Zustand der Presse den Zuführkanal (308,346) für die Befestigungselemente (306) sperrt, daß in der Annahmeeinrichtung (302) ein Querschieber (332) vorgesehen ist, welcher im geöffneten Zustand der Presse den Führungskanal (334,312) für die Befestigungselemente (306) sperrt, daß die Annahmeeinrichtung einen Steuerschieber (336) aufweist, welcher beim Schließen der Presse den Querschieber (328) der Übergabeeinrichtung (300) aus dem Führungskanal (346) entfernt und daß die Übergabeeinrichtung (300) einen Steuerschieber (322) aufweist, welcher beim Schließen der Presse den Querschieber (328) der Annahmeeinrichtung (302) aus dem Führungskanal (334) entfernt, wobei die Querschieber (328) der Annahmeeinrichtung (302) und (344) der Übergabeeinrichtung (300) in Richtung der die Führungskanäle (334 bzw.346) blockierenden Stellungen vorgespannt sind.

17. Vorrichtung nach Anspruch 16, **dadurch gekennzeichnet, daß** die Querschieber (328, 344) mittels einer Feder (326 bzw. 342) vorgespannt sind.

18. Vorrichtung nach Anspruch 16 oder 17, **dadurch gekennzeichnet, daß** sie mehrbahnig ausgeführt ist, wobei jede Bahn von einer jeweiligen Führungseinrichtung (308) gespeist wird, welche an einem jeweiligen, vorzugsweise modular aufgebauten Sortier- und Fördergerät kommt, und daß für jede Bahn der Übergabe- und Annahmeeinrichtung (300,302) jeweilige Steuer- und Querschieber (322,334 bzw. 336,334 vorgesehen sind.

19. Vorrichtung nach einem der vorhergehenden Ansprüche 7 bis 18, **dadurch gekennzeichnet, daß** am Stanzkopf (314) eine jeweilige Vorschubeinheit (346) für die Befestigungselemente (306) vorgesehen ist.

20. Vorrichtung nach Anspruch 19, **dadurch gekennzeichnet, daß** auch der Stanzkopf (314) mehrbahnig ausgeführt ist mit meinem getrennten Stößel (352,354) für jede Zuführbahn.

21. Vorrichtung nach einem der vorhergehenden Ansprüche 16 bis 20, **dadurch gekennzeichnet, daß** die jeweilige Annahme- und Übergabeeinrichtungen (300,302) wie auch der Stanzkopf (314) modular ausgebildet sind, wobei auch bei einem modular aufgebauten Stanzkopf (314) ein gemeinsamer Blechniederhalter (364) vorgesehen sein kann.

22. Vorrichtung nach einem der Ansprüche 7 bis 21, **dadurch gekennzeichnet, daß** die Annahmeeinrichtung an einer Verteilerstation angeschlossen ist, daß die Verteilerstation einen Zuführkanal (122) zur Aufnahme einer vorbestimmten Anzahl an Befestigungselementen (56) aufweist, daß mehrere Ausgangskanäle (124, 126, 128, 130) quer zum Zuführkanal (122) stehen und zu einem jeweiligen Stanz- bzw. Setzkopf (20) führen, und daß für jeden Ausgangskanal (124, 126, 128, 130) ein entsprechender, quer zum Zuführkanal (122) angeordneter Schieber (132) vorgesehen ist, der entsprechend dem Arbeitstakt der Presse jeweils ein Befestigungselement (56) in den zugeordneten Ausgangskanal (124, 126, 128, 130) schiebt.

23. Vorrichtung nach Anspruch 22, **dadurch gekennzeichnet, daß** für jeden Ausgangskanal (124, 126, 128, 130) eine Sperrklinke (142) vorgesehen ist, wobei beim Betätigen des entsprechenden Querschiebers (132) jeweils ein Element über die federbetätigte Sperrklinke (142) in den jeweiligen Ausgangskanal (124, 126, 128, 130) schiebbar ist.

24. Vorrichtung nach Anspruch 22 oder 23, **dadurch gekennzeichnet, daß** die Verteilerstation (38) modular ausgebildet ist und aus einem Anfangs- (164) und einem Endmodul (166) und einer gewünschten Anzahl von Zwischenmodulen (168) zusammengestellt ist, wobei jedes Modul (168) den entsprechenden Schieber (132) umfaßt.

25. Vorrichtung nach einem der Ansprüche 22 bis 24, **dadurch gekennzeichnet, daß** jedem Ausgangskanal eine Vorschubeinheit (148) zugeordnet ist, die für den Weitertransport der Befestigungselemente (56) zu dem jeweiligen Stanz- bzw. Setzkopf (20) verantwortlich ist.

26. Vorrichtung nach Anspruch 25, **dadurch gekennzeichnet, daß** die Vorschubeinheit (148) jedes Ausgangskanals (124, 126, 128, 130) einen pneumatisch betätigten, federbelasteten Kipphebel (152) aufweist.

27. Vorrichtung nach Anspruch 22, **dadurch gekennzeichnet, daß** die Ausgangskanäle (124, 126, 128, 130) der Verteilerstation (38) zumindest eine wesentliche Komponente in der vertikalen Richtung aufweisen und die Befestigungselemente (56), ggf. unterstützt durch federbelastete Druckstücke (180), infolge der Schwerkraft in die jeweiligen Ausgangskanäle (124, 126, 128, 130), ggf. nach Freigabe der Ausgangskanäle, durch einen betätigbaren Sperrschieber (182) hineinfallen.

28. Vorrichtung nach einem der Ansprüche 22 bis 27, **dadurch gekennzeichnet, daß** ein Näherungsschalter (184) zur Überwachung des Füllstandes der jeweiligen Ausgangskanäle (124, 126, 128, 130) vorgesehen ist.

29. Vorrichtung nach Anspruch 27, **dadurch gekennzeichnet, daß** jeder Ausgangskanal (124, 126, 128, 130) an einen zum jeweiligen Stanz- bzw. Setzkopf führenden Pührungskanal (40) anschließt, und daß eine Vorschubeinrichtung (148) mit einem pneumatisch betätigten, federbelasteten Kipphebel (152) für jeden Führungskanal (40) vorgesehen ist, um die sich im Führungskanal (40) befindlichen Befestigungselemente (56) in Richtung des Stanz- bzw. Setzkopfes (20) weiter zu bewegen.

30. Vorrichtung nach einem der vorhergehenden Ansprüche 7 bis 16, **dadurch gekennzeichnet, daß** die Annahmeeinrichtung an einer Verteilerstation angeschlossen ist, daß die Verteilerstation eine Drehtrommel (186) aufweist, die von einem Servomotor (188) ansteuerbar ist und mehrere, in Längsrichtung der Trommel angeordnete Aufnahmekanäle (122) aufweist, in die eine vorbestimmte Anzahl an Befestigungselementen (56) einspeisbar ist, wobei zumindest in einigen Schaltstellungen der Drehtrommel (186) ein jeweiliger Aufnahmekanal (122) mit den Ausgangskanälen (124, 126, 128, 130) der Verteilerstation (38) ausgerichtet ist und daß für jeden Ausgangskanal ein Sperrschieber (182) vorgesehen ist, der im geschlossenen Zustand ein Befestigungselement (56) im jeweiligen Aufnahmekanal der Drehtrommel (186) zurückhält, jedoch im geöffneten Zustand das entsprechende Befestigungselement (56) es ermöglicht, in den zugeordneten Ausgangskanal (124, 126, 128, 130) hinein zu fallen.

31. Vorrichtung nach Anspruch 30, **dadurch gekennzeichnet, daß** jedem Ausgangskanal ein Näherungsschalter (184) als Füllstandskontrolle zugeordnet ist.

32. Vorrichtung nach Anspruch 30 oder 31, **dadurch gekennzeichnet, daß** jeder Ausgangskanal (124, 126, 128, 130) an einen zum jeweiligen Stanz- bzw. Setzkopf führenden Führungskanal (40) anschließt, und daß eine Vorschubeinrichtung (148) mit einem pneumatisch betätigten, federbelasteten Kipphebel (152) für jeden Führungskanal (40) vorgesehen ist, um die sich im Führungskanal (40) befindlichen Befestigungselemente (56) in Richtung des Stanz- bzw. Setzkopfes (20) weiter zu bewegen.

33. Vorrichtung nach einem der vorhergehenden Ansprüche 7 bis 32, **dadurch gekennzeichnet, daß** ein Werkzeugwechselwagen (24) vorgesehen ist, der ein in die Presse einzusetzendes Werkzeug (16) sowie ein Fördergerät bzw. ein Sortier- und Fördergerät (26) für die entsprechenden Elemente trägt.

34. Vorrichtung nach Anspruch 33, **dadurch gekennzeichnet, daß** sich das Fördergerät bzw. das Sortier- und Fördergerät (26) nicht auf dem Werkzeugwechselwagen (24) befindet, sondern als separate Einheit außerhalb des Schutzgitters (194) der Presse steht.

35. Vorrichtung nach einem der vorhergehenden Ansprüche 7 bis 34, **dadurch gekennzeichnet, daß** das Sortier- und Fördergerät, das die Befestigungselemente ausrichtet und an eine Übergabeeinrichtung befördert, an einem Werkzeugwechselwagen montiert ist.

## Claims

1. A method for the transfer of fastener elements (56, 396) to punching heads (20, 314) in a press for the pressing of fastener elements into plate-like workpieces, in which the fastener elements (56, 306) are led to the press from a conveyor apparatus or sorting and conveyor apparatus (26) via a guide (30, 308), are conveyed from the conveyor apparatus or sorting and conveyor apparatus (26) into a transfer device (32, 300) at the lower tool (16, 316) or upper tool (12, 318) of the press (10) and transferred into a receiving device (34, 302) on the other respective tool (12, 318 or 16, 316), **characterized in that** the fastener element transfer from the transfer device (32, 300) into the receiving device (34, 302) takes place in the vertical direction, i.e. in or opposite to the closing direction of the press.

2. A method in accordance with claim 1, **characterized in that** the transfer to the other respective tool (12, 16) takes place when the press (10) is closed, i.e. is at the bottom dead center.

3. A method in accordance with claim 2, **characterized in that** when the press (10) is put into operation, it stops at bottom dead center and all passages (30, 60, 82, 100, 36, 122, 124, 126, 128, 130, 140) located in the lower tool (16) and upper tool (12) are filled with fastener elements (56).

4. A method in accordance with claim 3, **characterized in that** after the filling of the said channels (30, 60, 82, 100, 36, 122, 124, 126, 128, 130, 140), the press (10) is operated in automatic mode and the required refilling of fastener elements (56) is carried out as required when the press (10) is in the region of the bottom dead center.

5. A method in accordance with one of the preceding claims, **characterized in that** the fastener element transfer is carried out from the lower tool (16) to the upper tool (12).

6. A method in accordance with one of the preceding claims, **characterized in that** it is carried out with the manufacture of shaped sheet metal parts (18, 368) in transfer tools.

7. An apparatus for the transfer of fastener elements (56, 306) to a punching head (20, 314) in a press for the pressing into plate-like workpieces, having a transfer device (32, 300) and a receiving device (34, 302), in which the fastener elements (56, 306) are led to the press from a conveyor apparatus or sorting and conveyor apparatus (26) via a guide (30, 308), are conveyed from the conveyor apparatus or sorting and conveyor apparatus (26) into a transfer device (32, 300) at the lower tool (16, 316) or upper tool (12, 318) of the press (10) and are transferred into the receiving device (34, 302) on the other respective tool (12, 318 or 16, 316), **characterized in that** the guide passage sections of the transfer device (32, 300) and the receiving device (34, 302) are aligned in the same direction as the press tools move toward and away from one another, such that the fastener element transfer from the transfer device (32, 300) to the receiving device (34, 302) takes place in the vertical direction, i.e. in or opposite to the closing direction of the press (10).

8. An apparatus in accordance with claim 7, **characterized in that** the transfer device (32, 300) and the receiving device (34, 302) are designed such that the fastener element transfer takes place in the at least substantially closed state of the press.

9. An apparatus in accordance with claim 7 or claim 8, **characterized in that** a guide device (36, 312) leads from the receiving unit (34, 302) to a distributor station (38) or to a punching head (314).

10. An apparatus in accordance with any one of claims 7, 8 or 9, **characterized in that** a spring-loaded blocking means (70, 72) blocks the feed passage (82) of the transfer device (32) for the fastener elements (56) at its front end and **in that** a device (96, 98) is provided which opens this spring-loaded blocking means (70, 72) in the closed state of the press (10) to release the predetermined number of elements.

11. An apparatus in accordance with claim 10, **characterized in that** the receiving device (34) and the transfer device (32) are moved into one another in the closed state of the press.

12. An apparatus in accordance with claim 10 or claim 11, **characterized in that** the receiving device (34) has spring-loaded gripping means (102, 104) which are selected by the conveying pressure of the fastener elements (56) in the transfer device (32).

13. An apparatus in accordance with claim 12, **characterized in that** the transfer device (32) has spring-loaded blocking levers (70, 72) as the blocking means which are opened by means of a control edge (96, 98) when the receiving device (34) and the transfer device (32) move into one another.

14. An apparatus in accordance with claim 13 **characterized in that** the receiver device (34) is designed in such a way that the gripping means (102, 104) pull the uppermost fastener element (56) in the transfer device (32) out of the spring-loaded blocking levers (70, 72) when the press is opened (10).

15. An apparatus in accordance with claim 13 or claim 14, **characterized in that** the transfer device (32) has a spring-loaded cylinder which carries the spring-loaded blocking lever (70, 72) and which is pressed downward when the press (10) is closed and which is moved along with the receiving device (34) over a predetermined path when the press is opened to make available a sufficiently long time for the fastener element transfer without slowing down the operating speed of the press.

16. An apparatus in accordance with claim 7, **characterized in that** a cross slide (344) is provided in the transfer device (300) which blocks the feed passage (308, 346) for the fastener elements (306) in the opened state of the press, **in that** a control slide (332) is provided in the receiving device (302) which blocks the guide channel (334, 312) when the press is open, **in that** the receiving device has a control slide (336) which removes the cross slide (238) of the transfer device (300) from the guide passage (346) when the press is closed, and **in that** the transfer device (300) has a control slide (322) which removes the cross slide (328) of the receiving device (302) from the guide passage (334) when the press is closed, with the cross slides (328) of the receiving device (302) and (344) of the transfer device (300) being biased in the direction of the positions blocking the guide passages (334 and 346 respectively ).

17. An apparatus in accordance with claim 16, **characterized in that** the cross slides (328, 344) are biased by means of a spring (326 or 342).

18. An apparatus in accordance with claim 16 or claim 17, **characterized in that** it is made with multiple tracks, with each track being fed from one respective guide device (308) which comes from a respective sorting and conveyor apparatus, preferably modular in design, and **in that** respective control slides and cross slides (322, 334 and 336, 334 respectively) are provided for each track of the transfer and receiving devices.

19. An apparatus in accordance with one of the preceding claims 7 to 18, **characterized in that** a respective feed unit (346) for the fastener elements (306) is provided at the punching head (314).

20. An apparatus in accordance with claim 19, **characterized in that** the punching head (314) is also made with multiple tracks with a separate plunger (352, 354) for each feed track.

21. An apparatus in accordance with one of the preceding claims 16 to 20, **characterized in that** the respective receiving and transfer device (300, 302), such as the punching head (314), are made in modular form and **in that** a common sheet-metal hold down device (364) can also be provided in the event of a punching head (314) of a modular design.

22. An apparatus in accordance with one of claims 7 to 21, **characterized in that** the distributor station has a feed passage (122) to receive a predetermined number of fastener elements (56), **in that** a plurality of output passages (124, 126, 128, 130) are arranged transverse to the feed passage (122) and lead to a respective punching or setting head (20) and **in that** a corresponding slide (132) arranged transversely to the feed passage (122) is provided for each output passage (124, 126, 128, 130) and in each case pushes one fastener element (56) into the associated output passage (124, 126, 128, 130) in accordance with the operating cycle of the press.

23. An apparatus in accordance with claim 22, **characterized in that** a blocking latch (142) is provided for each output passage (124, 126, 128, 130), with one element in each case being capable of being pushed into the respective output passage (124, 126, 128, 130) via the spring-actuated blocking latch (142) when the corresponding cross slide (132) is actuated.

24. An apparatus in accordance with claim 22 or claim 23, **characterized in that** the distributor station (38) is made in modular form and is made up of a start module (164) and an end module (166) and a desired number of intermediate modules (168), with each module (168) including the corresponding slide (132).

25. An apparatus in accordance with one of claims 22 to 24, **characterized in that** a feed unit (148) is associated with each output channel and is responsible for the further transportation of the fastener elements (56) to the respective punching or setting head (20).

26. An apparatus in accordance with claim 25, **characterized in that** the feed unit (148) for each output passage (124, 126, 128, 130) has a pneumatically actuated, spring-loaded rocker lever (152).

27. An apparatus in accordance with claim 22, **characterized in that** the output passages (124, 126, 128, 130) of the distributor station (38) have at least one substantial component in the vertical direction and the fastener elements (56), optionally supported by spring-loaded pressure members (180), fall into the respective output passages (124, 126, 128, 130) as a result of gravity, optionally after freeing of the output passages, through an actuable blocking slide (182).

28. An apparatus in accordance with one of claims 22 to 27, **characterized in that** a proximity switch (184) is provided to monitor the filled state of the respective output passages (124, 126, 128, 130).

29. An apparatus in accordance with claim 27, **characterized in that** each output passage (124, 126, 128, 130) is adjacent to a guide passage (40) leading to the respective punching or setting head and **in that** a feed apparatus (148) is provided having a pneumatically actuated, spring-loaded rocker lever (152) for each guide passage (40) to move the fastener elements (56) located in the guide passage (40)on further in the direction of the punching or setting head (20).

30. An apparatus in accordance with one of the preceding claims 7 to 16, **characterized in that** the receiving device is connected to a distributor station; **in that** the distributor station has a rotatable drum (186), which is controllable by a servomotor (188), and has a plurality of receiving passages (122) which are arranged in the longitudinal direction of the rotatable drum and into which a predetermined number of fastener elements (56) can be fed, with a respective receiving passage (122) being aligned with the output passages (124, 126, 128, 130) at least in some operating positions of the rotatable drum (186) and **in that** a blocking slide (182) is provided for each output passage and retains a fastener element (56) in the respective receiving passage of the rotatable drum (186) in the closed state, but allows the corresponding fastener element (56) to fall into the associated output passage (124, 126, 128, 130) in the opened state.

31. An apparatus in accordance with claim 30, **characterized in that** a proximity switch (184) is associated with each output passage as a check on the filled state.

32. An apparatus in accordance with claim 30 or claim 31, **characterized in that** each output passage (124, 126, 128, 130) is adjacent to a guide passage (40) leading to the respective punching or setting head and **in that** a feed apparatus (148) is provided having a pneumatically actuated, spring-loaded rocker lever (152) for each guide passage (40) to move the fastener elements (56) located in the guide passage (40) on further in the direction of the punching or setting head (20).

33. An apparatus in accordance with one of the preceding claims 7 to 32, **characterized in that** a tool-changing carriage (24) is provided which carries a tool (16) to be inserted into the press and a conveyor apparatus or a sorting and conveyor apparatus (26) for the corresponding elements.

34. An apparatus in accordance with claim 33, **characterized in that** the conveyor apparatus or the sorting and conveyor apparatus (26) is not located on the tool-changing carriage (24), but as a stand-alone unit outside the protective guard (194) of the press.

35. An apparatus in accordance with any one of the preceding claims 7 to 34, **characterized in that** the sorting and conveying apparatus which orientates the fastener elements and forwards them to a transfer device is mounted on a tool-changing carriage.

## Revendications

1. Procédé pour le transfert d'éléments de fixation (56, 306) à des têtes d'estampage (20, 314) dans une presse pour enfoncer les éléments de fixation dans des pièces à oeuvrer en forme de plaque, les éléments de fixation (56, 306) étant approchés vers la presse par un appareil convoyeur ou par un appareil trieur et convoyeur (26) via un guidage (30, 308), convoyés jusque dans un dispositif de transfert (32, 300) sur la partie d'outil inférieure (16, 316) ou sur la partie d'outil supérieure (12, 318) de la presse (10) et transférés jusque dans un dispositif de réception (34, 302) sur l'autre partie d'outil respective (12, 318 ou 16, 316), **caractérisé en ce que** le transfert des éléments de fixation depuis le dispositif de transfert (32, 300) au dispositif de réception (34, 302) s'effectue en direction verticale, c'est-à-dire en direction de fermeture de la presse ou en sens opposé.

2. Procédé selon la revendication 1, **caractérisé en ce que** le transfert à l'autre partie d'outil respective (12, 16) s'effectue lorsque la presse (10) est rétractée, c'est-à-dire qu'elle se trouve au point mort bas.

3. Procédé selon la revendication 2, **caractérisé en ce que** lors de la mise en service de la presse (10), celle-ci s'arrête au point mort bas et tous les canaux (30, 60, 82, 100, 36, 122, 124, 126, 128, 130, 140) situés dans la partie d'outil inférieure (16) et dans la partie d'outil supérieure (12) sont remplis avec des éléments de fixation (56).

4. Procédé selon la revendication 3, **caractérisé en ce qu'**après le remplissage desdits canaux (30, 60, 82, 100, 36, 122, 124, 126, 128, 130, 140), la presse (10) fonctionne en mode automatique, et le re-remplissage nécessaire avec des éléments de fixation (56) est effectué en cas de besoin lorsque la presse (10) se trouve dans la zone du point mort bas.

5. Procédé selon l'une des revendications précédentes, **caractérisé en ce que** le transfert des éléments de fixation s'effectue depuis la partie d'outil inférieure (16) vers la partie d'outil supérieure (12).

6. Procédé selon l'une des revendications précédentes, **caractérisé en ce qu'**il est mis en oeuvre lors de la réalisation de pièces conformées en tôle (18, 368) dans des outils de transfert.

7. Système pour le transfert d'éléments de fixation (56, 306) à des têtes d'estampage (20, 314) dans une presse (10) pour l'enfoncement dans des pièces à oeuvrer en forme de plaque (18, 368), comportant un dispositif de transfert (32, 300) et un dispositif de réception (34, 302), les éléments de fixation (56, 306) étant approchés vers la presse (10) par un appareil convoyeur ou par un appareil trieur et convoyeur (26) via un guidage (30, 308), convoyés jusque dans le dispositif de transfert (32, 300) sur la partie d'outil inférieure (16, 316) ou sur la partie d'outil supérieure (12, 318) de la presse (10) et transférés jusque dans le dispositif de réception (34, 302) sur l'autre partie d'outil respective (12, 318 ou 16, 316), **caractérisé en ce que** les tronçons de canal de guidage du dispositif de transfert (32, 300) et du dispositif de réception (34, 302) sont orientés dans la même direction que celle le long de laquelle les outils de presse se rapprochent et s'éloignent les uns des autres, de sorte que le transfert des éléments de fixation depuis le dispositif de transfert (32, 300) au dispositif de réception (34, 302) s'effectue en direction verticale, c'est-à-dire en direction de fermeture de la presse (10) ou en sens opposé.

8. Système selon la revendication 7, **caractérisé en ce que** le dispositif de transfert (32, 300) et le dispositif de réception (34, 302) sont conçus de telle sorte que le transfert des éléments de fixation s'effectue dans l'état au moins sensiblement fermé de la presse.

9. Système selon l'une ou l'autre des revendications 7 et 8, **caractérisé en ce qu'**un dispositif de guidage (36, 312) mène depuis le dispositif de réception (34, 302) jusqu'à une station de répartition (38) ou jusqu'à une tête d'estampage (314).

10. Système selon l'une des revendications 7, 8 ou 9, **caractérisé en ce qu'**un obturateur (70, 72) chargé par un ressort obture le canal d'alimentation (82) du dispositif de transfert (32) pour les éléments de fixation (56) à son extrémité antérieure, et **en ce qu'**il est prévu un dispositif (96, 98) qui ouvre cet obturateur (70, 72) chargé par un ressort dans l'état rétracté de la presse (10) pour libérer le nombre prédéterminé d'éléments.

11. Système selon la revendication 10, **caractérisé en ce que** le dispositif de réception (34) et le dispositif de transfert (32) sont emboîtés l'un dans l'autre dans l'état rétracté de la presse.

12. Système selon l'une ou l'autre des revendications 10 et 11, **caractérisé en ce que** le dispositif de réception (34) comprend des preneurs (102, 104) chargés par des ressorts, qui sont commandés par la pression de convoyage des éléments de fixation (56) dans le dispositif de transfert (32).

13. Système selon la revendication 12, **caractérisé en ce que** le dispositif de transfert (32) comprend à titre d'obturateur des leviers d'obturation (70, 72) chargés par des ressorts, qui, lors de l'emboîtement du dispositif de réception (34) et du dispositif de transfert (32), sont commandés au moyen d'une arête de commande (96, 98).

14. Système selon la revendication 13, **caractérisé en ce que** le dispositif de réception (34) est conçu de telle sorte que lors du déploiement de la presse (10), les preneurs (102, 104) extraient l'élément de fixation (56) le plus haut dans le dispositif de transfert (32) hors des leviers d'obturation (70, 72) chargés par des ressorts.

15. Système selon l'une ou l'autre des revendications 13 et 14, **caractérisé en ce que** le dispositif de transfert (32) comprend un cylindre (84) chargé par un ressort et portant le levier d'obturation (70, 72) chargé par un ressort, cylindre qui est pressé vers le bas lors de la rétraction de la presse (10) et qui se déplace sur un trajet prédéterminé conjointement avec le dispositif de réception (34) lors de l'ouverture de la presse, afin de mettre à disposition une période suffisamment longue pour le transfert des éléments de fixation, sans ralentir la vitesse de travail de la presse.

16. Système selon la revendication 7, **caractérisé en ce que** dans le dispositif de transfert (300) est prévu un poussoir transversal (344) qui, dans l'état ouvert de la presse, obture le canal d'alimentation (308, 346) pour les éléments de fixation (306), **en ce que** dans le dispositif de réception (302) est prévu un poussoir transversal (332) qui, dans l'état ouvert de la presse, obture le canal d'alimentation (334, 312) pour les éléments de fixation (306), **en ce que** le dispositif de réception comprend un poussoir de commande (336) qui, lors de la fermeture de la presse, enlève le poussoir transversal (328) du dispositif de transfert (300) hors du canal de guidage (346), et **en ce que** le dispositif de transfert (300) comprend un poussoir de commande (322) qui, lors de la fermeture de la presse, enlève le poussoir transversal (328) du dispositif de réception (302) hors du canal de guidage (334), les poussoirs transversaux (328) du dispositif de réception (302) et (344) du dispositif de transfert (300) étant précontraints en direction des positions bloquant les canaux de guidage (334 ou 346).

17. Système selon la revendication 16, **caractérisé en ce que** les poussoirs transversaux (328, 344) sont précontraints au moyen d'un ressort (326 ou 342).

18. Système selon l'une ou l'autre des revendications 16 et 17, **caractérisé en ce qu'**il est réalisé avec plusieurs voies, chaque voie étant alimentée par un dispositif de guidage respectif (308) qui vient sur un appareil trieur et convoyeur respectif conçu de préférence de façon modulaire, et **en ce qu'**il est prévu pour chaque voie du dispositif de transfert et de réception (300, 302) des poussoirs de commande et des poussoirs transversaux respectifs (322, 334 ou 336, 334).

19. Système selon l'une des revendications 7 à 18, **caractérisé en ce qu'**il est prévu sur la tête d'estampage (314) une unité d'avance respective (346) pour les éléments de fixation (306).

20. Système selon la revendication 19, **caractérisé en ce que** la tête d'estampage (314) est également réalisée à plusieurs voies avec un poinçon séparé (352, 354) pour chaque voie d'alimentation.

21. Système selon l'une des revendications 16 à 20, **caractérisé en ce que** les dispositifs de réception et de transfert respectifs (300, 302) sont réalisés de façon modulaire, tout comme la tête d'estampage (314), un élément de maintien de tôle commun (364) pouvant être prévu également dans une tête d'estampage (314) conçue modulaire.

22. Système selon l'une des revendications 7 à 21, **caractérisé en ce que** le dispositif de réception est raccordé à une station de répartition, **en ce que** la station de répartition comprend un canal d'alimentation (122) pour recevoir un nombre prédéterminé d'éléments de fixation (56), **en ce que** plusieurs canaux de sortie (124, 126, 128, 130) se trouvent perpendiculairement au canal d'alimentation (122) et mènent à une tête d'estampage ou de pose respective (20), et **en ce qu'**il est prévu pour chaque canal de sortie (124, 126, 128, 130) un poussoir correspondant (132) qui est agencé perpendiculairement au canal d'alimentation (122) et qui pousse un élément de fixation respectif (56) dans le canal de sortie associé (124, 126, 128, 130) en correspondance de la cadence de travail de la presse.

23. Système selon la revendication 22, **caractérisé en ce qu'**il est prévu un cliquet d'obturation (142) pour chaque canal de sortie (124, 126, 128, 130), et lors de l'actionnement du poussoir transversal correspondant (132), un élément respectif peut être poussé via le cliquet d'obturation (142), actionné par un ressort, jusque dans le canal de sortie respectif (124, 126, 128, 130).

24. Système selon l'une ou l'autre des revendications 22 et 23, **caractérisé en ce que** la station de répartition (38) est réalisée de façon modulaire et est composée par un module initial (164) et par un module final (166) et par un nombre désiré de modules intermédiaires (168), chaque module (168) comprenant le poussoir correspondant (132).

25. Système selon l'une des revendications 22 à 24, **caractérisé en ce qu'**une unité d'avance (148) est associée à chaque canal de sortie, laquelle est responsable de la poursuite du transport des éléments de fixation (56) jusqu'à la tête d'estampage ou de pose respective (20).

26. Système selon la revendication 25, **caractérisé en ce que** l'unité d'avance (148) de chaque canal de sortie (124, 126, 128, 130) comprend un levier de renversement (152) actionné par voie pneumatique et chargé par un ressort.

27. Système selon la revendication 22, **caractérisé en ce que** les canaux de sortie (124, 126, 128, 130) de la station de répartition (38) comprennent au moins un composant essentiel en direction verticale, et les éléments de fixation (56), le cas échéant en étant assistés par des pièces de pression (180) chargées par des ressorts, tombent dans les canaux de sortie respectifs (124, 126, 128, 130) en raison de la gravité, le cas échéant après libération des canaux de sortie, par un poussoir d'obturation (182) susceptible d'être actionné.

28. Système selon l'une des revendications 22 à 27, **caractérisé en ce qu'**il est prévu un détecteur de proximité (184) pour surveiller l'état de remplissage des canaux de sortie respectifs (124, 126, 128, 130).

29. Système selon la revendication 27, **caractérisé en ce que** chaque canal de sortie (124, 126, 128, 130) se raccorde à un canal de guidage (40) menant vers la tête d'estampage ou de pose respective, et **en ce qu'**il est prévu pour chaque canal de guidage (40) un dispositif d'avance (148) comportant un levier de renversement (152) actionné par voie pneumatique et chargé par un ressort, afin de continuer à déplacer les éléments de fixation (56) situés dans le canal de guidage (40) en direction de la tête d'estampage ou de pose (20).

30. Système selon l'une des revendications 7 à 16, **caractérisé en ce que** le dispositif de réception est raccordé à une station de répartition, **en ce que** la station de répartition comprend un tambour rotatif (186) qui peut être piloté par un servomoteur (188) et qui comprend plusieurs canaux de réception (122) agencés en direction longitudinale du tambour, dans lesquels un nombre prédéterminé d'éléments de fixation (56) peuvent être alimentés, dans lequel au moins dans quelques-unes des positions de commutation du tambour rotatif (186) un canal de réception respectif (122) est aligné avec les canaux de sortie (124, 126, 128, 130) de la station de répartition (38), et **en ce qu'**il est prévu un poussoir d'obturation (182) pour chaque canal de sortie, qui, dans l'état fermé, retient un élément de fixation (56) dans le canal de réception respectif du tambour rotatif (186), mais qui permet dans l'état ouvert à l'élément de fixation correspondant (56) de tomber dans le canal de sortie associé (124, 126, 128, 130).

31. Système selon la revendication 30, **caractérisé en ce qu'**un détecteur de proximité (184) est associé à titre de contrôle de l'état de remplissage à chaque canal de sortie.

32. Système selon l'une ou l'autre des revendications 30 et 31, **caractérisé en ce que** chaque canal de sortie (124, 126, 128, 130) se raccorde à un canal de guidage (40) menant à la tête d'estampage ou de pose respective, et **en ce qu'**il est prévu pour chaque canal de guidage (40) un dispositif d'avance (148) comportant un levier de renversement (152) actionné par voie pneumatique et chargé par un ressort, afin de continuer à déplacer les éléments de fixation (56), situés dans le canal de guidage (40), en direction de la tête d'estampage ou de pose (20).

33. Système selon l'une des revendications 7 à 32, **caractérisé en ce qu'**il est prévu un chariot de changement d'outil (24) qui porte un outil (16) à poser dans la presse ainsi qu'un appareil convoyeur ou un appareil trieur et convoyeur (26) pour les éléments correspondants.

34. Système selon la revendication 33, **caractérisé en ce que** l'appareil convoyeur ou l'appareil trieur et convoyeur (26) ne se trouve pas sur le chariot de changement d'outil (24), mais sous forme d'unité séparée à l'extérieur de la grille de protection (194) de la presse.

35. Système selon l'une des revendications 7 à 34, **caractérisé en ce que** l'appareil trieur et convoyeur qui aligne les éléments de fixation et qui les convoie à un dispositif de transfert est monté sur un chariot de changement d'outil.
